# EUROPÄISCHE PATENTANMELDUNG

(11) **EP 4 792 698 A2**
(43) Veröffentlichungstag der Anmeldung: **19.08.2026**
(21) Anmeldenummer: 26189590.8
(22) Anmeldetag: 21.12.2018
(51) Int. Cl.: A47J 42/18

(54) **EINHEIT EINER KAFFEEVORRICHTUNG MIT EINEM BOHNENBEHÄLTER, EINER DOSIEREINRICHTUNG UND EINEM MAHLWERK**

(30) Priorität: 22.12.2017 EP 17210032; 31.05.2018 EP 18175384; 05.10.2018 EP 18198887
(62) Dokumentnummer(n) der früheren Anmeldung(en) nach Art. 76 EPÜ: 18829405.2 / 3 697 268
(71) Anmelder: Creatrix AG, 9100 Herisau (CH)
(72) Erfinder: DEUBER, Louis, 8805 Richterswil (CH); SCHREPFER, Patrick, 9630 Wattwil (CH); FOSCAN, Claudio, 8645 Jona (CH); SCHULTHEISS, Christian, 9630 Wattwil (CH)
(74) Vertreter: Clerc, Natalia

(57) **Zusammenfassung**

Ein Behältermodul zur Verwendung in einer Kaffeevorrichtung, die ein Mahlwerk aufweist, insbesondere einer Kaffeemaschine zum Brühen eines Kaffeegetränks, weist einen Kaffeebohnenbehälter (1) zur Lagerung von Kaffeebohnen und einen Portionierer (2) zur Dosierung der Kaffeebohnen auf. Das Behältermodul weist Verbindungsmittel zur lösbaren Verbindung mit einer Modulaufnahme (3) der Kaffeevorrichtung auf und einen beschreibbaren Datenspeicher, auf welchem Daten eingegeben sind, die mittels Eingabe in die Kaffeevorrichtung und mittels Übermittlung von der Kaffeevorrichtung an den Datenspeicher von einem Benützer veränderbar sind. Das Behältermodul erlaubt ein einfaches und benützerfreundliches Wechseln zwischen Kaffeesorten und/oder Dosierungen und/oder Mahlgrade.

## Beschreibung

### TECHNISCHES GEBIET

Die vorliegende Erfindung betrifft ein Behältermodul zur Verwendung in einer Kaffeevorrichtung und eine Einheit einer Kaffeevorrichtung, insbesondere einer Kaffeemaschine zum Brühen eines Kaffeegetränks oder einer Espresso-Kaffeemühle.

### STAND DER TECHNIK

Kaffee ist ein Genussmittel, welches einer fachgerechten Zubereitung bedarf. Damit Kaffee sein Aroma optimal entfalten kann, sollten die Kaffeebohnen zum Beispiel immer erst unmittelbar vor der Zubereitung des Kaffees gemahlen werden. Dies genügt jedoch leider nicht, um einen optimalen Kaffeegenuss zu gewährleisten.

Beim jeder Mahlung bleiben erhebliche Reste gemahlenen Kaffeepulvers im Mahlwerk, im Pulverkanal und in der Dosiereinheit zurück. Dies führt dazu, dass frisch gemahlener Kaffee mit altem Kaffeepulver vermischt wird. Aus diesem Grund wird meistens von den Maschinenherstellern empfohlen, 2 bis 3 Kaffeebezüge wegzuschütten, wenn eine Kaffeemaschine einige Zeit nicht mehr gebraucht wurde. Der Kaffee kann sonst ranzig schmecken, weil zum Teil noch altes Kaffeepulver zum Zubereiten verwendet wurde.

Aufgrund dieser Restmengen wird zudem das Aroma des nachfolgend gebrühten Kaffeegetränks, insbesondere bei Wechsel der Kaffeesorte, negativ beeinflusst, da es beim Wechsel der Kaffeesorte zu Sortenmischungen in der Maschine kommt.

Ferner besteht bei bestehenden Kaffeemaschinen auch der Nachteil, dass nicht die genau vorbestimmte Menge Kaffeepulver für die Herstellung des Getränks verwendet wird, sondern dass jeweils eine nicht definierte Mischmenge aus altem und neuem Kaffeepulver in die Brüheinheit gelangt.

Des Weiteren ist der richtige Mahlgrad zur optimalen Entfaltung aller Aromastoffe sehr wichtig. In der Regel werden bei Kaffeevollautomaten Kaffeepulver aus Espressobohnen und z.B. aus Milchkaffeebohnen oder auch aus Lungos mit der gleichen Mahlfeinheit hergestellt. Es ist aber äusserst wichtig, dass die entsprechenden Bohnen, dunkel oder hell geröstet, auch mit dem korrekten Mahlgrad gemahlen werden.

Es sind mehrere Systeme bekannt, welche die Zubereitung eines Kaffeegetränks von der Kaffeebohne bis zum gebrühten Getränk in der Kaffeetasse ermöglichen. Diese Systeme beschäftigen sich zum Teil auch mit den obigen Problemen, ohne jedoch eine kostengünstige und umfassende Lösung anzubieten.

Die in WO 2011/102720 A1 offenbarten Systeme sind relativ kompliziert und aufwändig und somit für den Heimgebrauch zu teuer.

EP 1 700 549 schlägt vor, mindestens zwei Bohnenbehälter mit jeweils einem zugehörigen Mahlwerk zu verwenden. Derartige Maschinen sind für den Heimgebrauch jedoch zu teuer. Zudem ist die Problematik der hängen bleibenden Restmenge und des Aromaverlusts damit nicht behoben.

WO 2013/078437 schlägt vor, die Maschine zwischen einzelnen Brühvorgängen zu reinigen. Diese Lösung ist für den Heimgebrauch ebenfalls zu teuer und auch für die kommerzielle Anwendung zu zeitaufwändig.

Ferner sind unterschiedliche Dosiervorrichtungen für Kaffeebohnen bekannt. So offenbaren US 2 584 781 und FR 2 755 431 drehbare Dosierkammern für Kaffee, Tee, Zucker, Kakaopulver oder Mehl. DE 93 08 402 U offenbart einen Kaffeepulverbehälter mit integrierter drehbarer Dosierkammer. Dieser Behälter soll anschliessend über einen Filter gehalten werden, um die vordosierte Menge Kaffeepulver in den Filter zu schütten. Anschliessend wird heisses Wasser in den Filter gegossen und somit werden mehrere Portionen Kaffee gemeinsam gebrüht. FR 2 565 088 zeigt einen Dosierer in Form einer Kammer zwischen einem Kaffeebohnenbehälter und einem Mahlwerk. Der Dosierer wird um eine horizontale Achse gedreht, um eine vordefinierte Menge Bohnen in das Mahlwerk zu geben.

### DARSTELLUNG DER ERFINDUNG

Es ist deshalb eine Aufgabe der Erfindung, eine Vorrichtung zu schaffen, welche auf einfache Art und Weise eine optimale Zubereitung eines Kaffeegetränks ermöglicht, ohne dass das Kaffeearoma durch vorgängige Zubereitungen beeinträchtigt wird und ohne dass der Benützer zeitaufwändige Umstellungen an der Kaffeevorrichtung durchführen muss.

Diese Aufgabe lösen ein Behältermodul mit den Merkmalen eines der Ansprüche 1, 2 oder 3 sowie eine Einheit einer Kaffeevorrichtung mit den Merkmalen eines der Ansprüche 12 oder 18.

Eine erfindungsgemässe Ausbildungsform der Einheit einer Kaffeevorrichtung, insbesondere einer Kaffeemaschine zum Brühen eines Kaffeegetränks oder einer Espresso-Kaffeemühle, weist einen Kaffeebohnenbehälter zur Lagerung der Kaffeebohnen, einen Portionierer zur Dosierung der Kaffeebohnen für ein Kaffeegetränk und ein Mahlwerk zum Mahlen der dosierten Kaffeebohnen auf. Der Kaffeebohnenbehälter und der Portionierer sind in einem gemeinsamen Behältermodul ausgebildet. Die Einheit weist eine Modulaufnahme auf, mit welchem das Behältermodul bei Gebrauch verbindbar und nach Gebrauch entfernbar ist. Das Behältermodul weist durch den Benützer wählbare Einstellungen einer Dosiermenge und eines Mahlgrades auf, wobei die Einstellung der Dosiermenge auf den Portionierer und die Einstellung des Mahlgrades auf das Mahlwerk wirkt.

Unter Kaffeevorrichtung wird in diesem Text eine Kaffeemaschine mit Mahlwerk und Brühvorrichtung, aber auch eine Kaffeemühle verstanden, welche gehäusemässig getrennt von einer Brühvorrichtung Kaffeebohnen mahlt, sie jedoch zu zeitnahen bzw. unmittelbar darauf folgenden Verwendung in einer Brühvorrichtung zu Verfügung stellen kann. Diese Kaffeemühlen werden üblicherweise als Espresso-Kaffeemühlen bezeichnet, wobei sie je nach Ausführungsform auch Kaffeepulver für Lungos und zwei-Portionen-Kaffees in einem einzigen Mahlgang bereitstellen können. Im folgenden Text wird aus Gründen der Einfachheit nur noch von Kaffeemaschine gesprochen, wobei die oben beschriebenen Kaffeemühlen und ähnliche Vorrichtungen zur Vorbereitung des Kaffees mitumfasst sind.

Unter "Kaffeegetränk" wird in diesem Text üblicherweise eine einzelne oder zwei Tassen Kaffee verstanden, da die Kaffeemaschinen jeweils für diese Art der gleichzeitigen Zubereitung ausgebildet sind. Der Begriff umfasst jedoch auch die Zubereitung einer grösseren Menge Kaffee, z.B. einer kleinen Kaffeekanne, welche mit Kaffee aus einer einzigen Dosierung und einer einzigen Mahlung gefüllt wird.

Da die Einstellungen zum Mahlgrad und zur Dosierung, welche von der Kaffeebohnensorte und auch vom Geschmack des jeweiligen Benützers abhängen, direkt auf dem Behältermodul eingestellt werden können, sind sie fest mit der gelagerten Kaffeebohnensorte verbunden. Da diese Einstellungen bei Verbindung des Behältermoduls mit der restlichen Kaffeemaschine ohne weitere Aktion des Benützers berücksichtigt und ausgeführt werden, müssen diese Einstellungen nicht bei jeder erneuten Verwendung dieser Kaffeesorte wieder an der Maschine eingestellt werden. Die Handhabung ist somit einfach und die Fehleranfälligkeit minimiert. Da der Portionierer gemeinsam mit dem Kaffeebohnenbehälter in einem Modul angeordnet ist, können Aromastoffe, welche im Portionierer verbleiben, eine nachfolgende Verwendung nicht beeinträchtigen, da ja dieselbe Kaffeesorte wieder verwendet wird bzw. da ja bei einem Wechsel der Kaffeesorte auch das Behältermodul inklusive Portionierer gewechselt wird.

Es empfiehlt sich, das Mahlwerk so zu gestalten bzw. zu betreiben, dass es nach jedem Mahlen vollständig entleert wird und kein gemahlenes Kaffeepulver im Mahlwerk verbleibt. Lösungen hierzu sind hinlänglich bekannt.

Eine erfindungsgemässe Ausbildungsform der Einheit bietet somit jederzeit einen frisch gemahlenen Kaffee ohne Beeinträchtigung des Aromas. Es ist ein einfaches Wechseln der Bohnensorte möglich. Die übrigen Bohnen lassen sich dank des luftdicht oder annähernd luftdicht verschliessbaren Behältermoduls ohne Aromaverlust lagern. Die Einstellungen an der Kaffeemaschine lassen sich bohnen- und benützerabhängig einfach ändern, wobei einmal zu einer Kaffeesorte eingestellte Parameter bei späterer Benützung der Maschine nicht mehr eingestellt werden müssen, selbst wenn dazwischen eine andere Kaffeesorte gebrüht wurde. Da das Behältermodul keine elektronischen Bauteile aufweisen muss, lässt es sich relativ kostengünstig herstellen. In anderen Ausführungsformen, insbesondere für den Gastronomie-Bereich oder für Maschinen in einem höheren Preissegment, weist das Behältermodul vorzugsweise auch elektronische Bauteile auf.

In einfachen Ausführungsformen erfolgen sämtliche Einstellungen manuell und die Wirkung der Einstellungen auf den Portionierer bzw. dem Mahlwerk erfolgt mit mechanischen Mitteln. In anderen Ausführungsformen sind Teile davon elektronisch gesteuert.

Je nach Ausführungsform wird nach Durchführung der Einstellungen am Portionierer und am Mahlwerk die Maschine gestartet, d.h. der Mahlvorgang und der Brühvorgang erfolgt. In anderen Ausführungsformen lässt sich ein Brühprogramm an der Maschine einstellen, z.B. die Brühtemperatur und/oder Zeitdauer des Mahlvorgangs und/oder des Brühvorgangs in Abhängigkeit der Kaffeesorte oder den individuellen Wünschen des Benützers. In weiteren Ausführungsformen weist das Behältermodul entsprechende Anweisungen an den Benützer oder die Steuerung der Kaffeemaschine auf. Falls die Steuerung der Kaffeemaschine diese zusätzlichen Angaben automatisch umsetzen soll, so ist vorzugsweise im Aufnahmemodul oder an einer anderen geeigneten Stelle der Kaffeemaschine ein Lesegerät vorhanden, um diese Angaben zur Kaffeesorte oder anderslautende Einstelllungen zu erkennen und der Steuerung zu übermitteln.

Vorzugsweise sind die Einstellung der Dosiermenge und/oder die Einstellung des Mahlgrades manuell durchführbar. Je nach Ausführungsform ist eine oder beide dieser Einstellungen vor der Verbindung des Behältermoduls mit der Modulaufnahme durchführbar. Dadurch lassen sich bereits bei der Befüllung des Behälters die gewünschten Einstellungen vornehmen und bei Gebrauch ist bereits alles auf die gewünschte Weise voreingestellt. Zudem lassen sich derartige gefüllte Behälter bereits mit empfohlenen Voreinstellungen vertreiben. Zudem muss nicht bei jeder erneuten Benützung eine erneute Einstellung vorgenommen werden, wobei die Einstellung jedoch selbstverständlich bei jeder Benützung geändert werden kann. In anderen Ausführungsformen ist eine der Einstellungen oder es sind beide der Einstellungen alternativ oder zusätzlich auch nach der Verbindung des Behältermoduls mit der Modulaufnahme noch veränderbar. Dadurch lassen sich verschiedene Varianten von Einstellungen ausprobieren, ohne dass das Behältermodul dazwischen entfernt werden muss.

In bevorzugten Ausführungsformen ist eine Drehsicherung vorhanden, welche ein vorzeitiges Entleeren des Portioniers verhindert. Vorzugsweise wird diese Verdrehsicherung aufgehoben, wenn das Behältermodul annähernd vollständig oder vollständig auf der Kaffeevorrichtung befestigt bzw. aufgesetzt ist.

Vorzugsweise schafft die Modulaufnahme eine Verbindung zwischen dem Portionierer und dem Mahlwerk, wobei die Modulaufnahme und das Mahlwerk an oder in einem Gehäuse der Kaffeemaschine angeordnet sind. Dadurch ist die Einheit kompakt ausgebildet und es lassen sich auch Kaffeemaschinen für den privaten Gebrauch mit dieser Einheit ausbilden.

In einer Ausführungsform erfolgen die Einstellungen der Dosiermenge und des Mahlgrads mechanisch. Die Wirkung der Einstellungen auf den Portionierer und auf das Mahlwerk erfolgt vorzugsweise ebenfalls mechanisch. Dies ist eine einfache, robuste und kostengünstige Lösung, insbesondere für Maschinen für den privaten Gebrauch.

In anderen Ausführungsformen erfolgen die Einstellungen des Portionierers und/oder des Mahlwerks elektronisch.

In einer Ausführungsform erfolgt die Wirkung der Einstellung des Mahlwerks über einen Sensor, welcher in der Modulaufnahme angeordnet ist, wobei der Sensor mit einer Steuerung der Vorrichtung in kommunizierender Verbindung steht.

In einer Ausführungsform weist das Behältermodul einen beschreibbaren Datenspeicher auf zur Kommunikation mit einer Lese- und Schreibeinheit der Modulaufnahme, wobei mindestens Daten zu einer aktuellen Mahlgradeinstellung des Mahlwerks in den Datenspeicher speicherbar sind.

In bevorzugten Ausführungsformen ist der Portionierer nach Verbindung des Behältermoduls mit der Modulaufnahme mittels eines Behältermodul-externen Antriebs betätigbar, um eine gewählte Dosiermenge im Portionierer bereit zu stellen und dem Mahlwerk zuzuführen. Diese Lösung minimiert die Fehleranfälligkeit und vereinfacht die Bedienung der Kaffeemaschine. Der Benützer muss lediglich das Behältermodul an die Maschine andocken und die Maschine einschalten.

Vorzugsweise weist der Portionierer eine Dosierkammer auf, wobei zwecks Einstellung der Dosiermenge das Aufnahmevolumen der Dosierkammer veränderbar ist. Die Dosierkammer ist ein einfaches und kostengünstiges Mittel, um Kaffeebohnen in gewünschter Menge zu verarbeiten. Es erübrigen sich dadurch Sensoren oder andere energieverbrauchende Messmittel am Behältermodul. Das Behältermodul lässt sich somit relativ einfach und kostengünstig ausführen. Insbesondere lässt es sich, insbesondere im Falle von fehlenden elektronischen Bauteilen, vollständig waschbar ausbilden.

In einer bevorzugten Ausführungsform weist der Portionierer eine erste Drehscheibe und eine zweite Drehscheibe auf, deren Abstand zueinander veränderbar ist und welche gemeinsam relativ zum dem Kaffeebohnenbehälter und relativ zu einem Boden des Portionierers drehbar sind. Die Dosierkammer ist zwischen der ersten und zweiten Drehscheibe ausgebildet, wobei die Dosierkammer abhängig von der Drehposition der ersten und zweiten Drehscheibe gegenüber einem Bauteil der beiden Bauteile, Kaffeebohnenbehälter und Mahlwerk offen ist und gegenüber dem anderen Bauteil dieser zwei Bauteile geschlossen ist.

In einer bevorzugten Ausführungsform weist der Portionierer ein erstes Kammerteil und ein zweites Kammerteil auf, welche in axialer Richtung relativ zueinander verschiebbar sind. Die Dosierkammer ist zwischen dem ersten und dem zweiten Kammerteil ausgebildet. Die Dosierkammer ist abhängig von einer Drehposition mindestens eines der zwei Kammerteile gegenüber einem Bauteil der beiden Bauteile, Kaffeebohnenbehälter und Mahlwerk offen und gegenüber dem anderen Bauteil dieser zwei Bauteile geschlossen.

Diese Ausbildungen einer Dosierkammer lassen sich auch in anderen Kaffeemaschinen, d.h. nicht gekoppelt mit dem erfindungsgemässen Behältermodul, verwenden. Sie werden deshalb als separate Erfindung ebenfalls beansprucht.

Vorzugsweise ist zur Einstellung der Dosiermenge ein Einstellring vorhanden, welcher an einem Umfang des Kaffeebohnenbehälters drehbar angeordnet ist. Je nach Ausführungsform dreht sich der Kaffeebohnenbehälter oder der Portionierer bei der Einstellung gemeinsam mit dem Einstellring relativ zum restlichen Modulgehäuse mit. Ein einer bevorzugten Ausführungsform dreht sich jedoch der Kaffeebohnenbehälter und vorzugsweise ebenfalls das übrige Gehäuse des Behältermoduls nicht mit diesem Einstellring mit.

In bevorzugten Ausführungsformen weist das Mahlwerk zwei Mahlscheiben auf, wobei mindestens eine der zwei Mahlscheiben nach Massgabe der Einstellung des Mahlgrades bei oder nach Verbindung des Behältermoduls mit der Modulaufnahme verschiebbar ist.

In bevorzugten Ausführungsformen weist das Behältermodul einen Mahlgrad-Einsteller auf, welcher bei Verbindung des Behältermoduls mit der Modulaufnahme in mechanische Wirkverbindung mit dem Mahlwerk bringbar ist, wodurch sich der Abstand von Mahlscheiben des Mahlwerks verändert.

Vorzugsweise ist eine nicht drehende feste Mahlscheibe verschiebbar und eine sich drehende Laufscheibe ist nicht mittels der Einstellung verschiebbar. In anderen Ausführungsformen ist die Anordnung genau umgekehrt, d.h. die feste Mahlscheibe ist nicht mittels der Einstellung verschiebbar und die Laufscheibe ist entsprechend verschiebbar.

Vorzugsweise ist die Einstellung des Mahlgrads am Behältermodul mit einer drehbaren Einstellscheibe der Modulaufnahme in Wirkverbindung bringbar, wobei die Einstellscheibe mit einer drehbaren Überwurfmutter des Mahlwerks in Wirkverbindung steht und wobei aufgrund der Drehung der Überwurfmutter eine erste Mahlscheibe relativ zu einer zweiten Mahlscheibe verschiebbar ist, so dass sich deren Abstand verändert. Vorzugsweise ist eine nicht drehende feste Mahlscheibe und die zweite Mahlscheibe eine sich drehende Laufmahlscheibe ist.

Diese Ausbildung der verschiebbaren festen Mahlscheibe und der axial nicht verschiebbaren Laufscheibe, insbesondere wenn sie horizontal oder annähernd horizontal angeordnet sind, lässt sich auch in anderen Kaffeemaschinen, d.h. nicht gekoppelt mit dem erfindungsgemässen Behältermodul, verwenden. Sie wird deshalb als separate Erfindung ebenfalls beansprucht.

Vorzugsweise weist das Behältermodul ein Einstellmittel zur Einstellung des Mahlgrads auf, wobei dieses Einstellmittel auf einer Unterseite oder am Umfang des Behältermoduls angeordnet ist. Die Ausbildung auf dem Umfang hat den Vorteil, dass das Einstellmittel besser zugänglich ist und der Behälter zwecks Veränderung der Einstellung nicht gekippt oder sogar auf den Kopf gestellt werden muss. In einer bevorzugten Ausführungsform ist dieses Einstellmittel ein Einstellring, welcher an einem Umfang des Kaffeebohnenbehälters drehbar angeordnet ist. Vorzugsweise ist auch der Einstellring zur Einstellung des Mahlgrades relativ zum Kaffeebohnenbehälter und vorzugsweise auch relativ zum restlichen äusseren Gehäuse des Behältermoduls drehbar. Unter "drehbar" wird im gesamten Text, wo technisch sinnvoll, auch schwenkbar um einen Winkel von kleiner als 360° verstanden.

In bevorzugten Ausführungsformen ist die Einstellung des Mahlgrades auch bei montiertem Behältermodul manuell veränderbar. Vorzugsweise lässt sich die Einstellung des Mahlgrades bei montiertem Behältermodul sowohl in Richtung eines feineren Mahlgrades wie auch in Richtung eines gröberen Mahlgrades verändern.

In bevorzugten Ausführungsformen ist der Kaffeebohnenbehälter lösbar mit dem Portionierer verbunden, wobei der Portionierer zusammen mit einem Mahlgrad-Einsteller zum Einstellen des Mahlgrades ein Untermodul bilden, welches zur Verbindung mit der Modulaufnahme ausgebildet ist. Diese lösbare Verbindung ermöglicht eine einfachere Reinigung des Behältermoduls und ermöglicht zudem, dass Einweg-Kaffeebohnenbehälter verwendet werden können, die nach der vollständigen Entleerung entsorgt werden können.

Vorzugsweise weist das Mahlwerk einen die Mahlscheibe antreibenden Förderrotor, d.h. eine Rotorwelle oder eine Drehachse, auf, welcher annähernd oder genau horizontal verlaufend angeordnet ist, und mit einem Elektromotor verbunden. Vorzugsweise wird somit ein liegendes Mahlwerk verwendet. Dies ist platzsparend und garantiert besser, dass das Mahlwerk nach jedem Mahlen vollständig entleert werden kann.

In bevorzugten Ausführungsformen weist das Mahlwerk einen Bohneneinlasskanal auf, welcher gebogen ausgebildet ist. Dies erleichtert die vollständige und schonende Entleerung der Dosierkammer und gewährleistet eine optimale Zuführung der geförderten Kaffeebohnen in das Mahlwerk. Vorzugsweise erstreckt sich der Förderrotor in den Bohneneinlasskanal. Diese Anordnung gewährleistet, dass alle Kaffeebohnen durch das Mahlwerk gefördert und somit gemahlen werden. Das Mahlwerk und insbesondere sein Kaffeepulverauslass sind so gestaltet, dass kein gemahlenes Kaffeepulver liegen bleibt, sondern jeweils die gesamte dosierte Menge der gemahlenen Kaffeebohnen in die Brüheinheit gelangt.

Eine erfindungsgemässe Ausbildungsform des Behältermodul weist einen Kaffeebohnenbehälter zur Lagerung der Kaffeebohnen und einen Portionierer zur Dosierung der Kaffeebohnen für das Kaffeegetränk auf, wobei das Behältermodul Verbindungsmittel zur lösbaren Verbindung mit der Modulaufnahme der Kaffeemaschine aufweist und wobei das Behältermodul durch den Benützer wählbare Einstellungen einer Dosiermenge und eines Mahlgrades aufweist. Die Einstellung der Dosiermenge wirkt auf den Portionierer und die Einstellung des Mahlgrades auf das Mahlwerk. Es lassen sich mehrere derartige Behältermodule pro Kaffeemaschine verwenden, wobei sie einzeln mit Modulaufnahme verbunden werden. Je nach Ausbildung der Kaffeemaschine kann diese auch mehrere Modulaufnahmen mit jeweils zugehörigen Mahlwerken oder mit einem gemeinsamen Mahlwerk für alle Modulaufnahmen aufweisen. Vorzugsweise ist der Mahlgrad-Einsteller, welcher mechanisch auf das Mahlwerk wirkt, ebenfalls Teil des Behältermoduls.

Die einzelnen Behältermodule ermöglichen es, verschiedene Kaffeesorten mit bereits eingestellten Parametern für das Brühen des Kaffees aufzubewahren und diese Parameter ohne weiteres Zutun des Benützers beim Ankoppeln an die Kaffeemaschine umsetzen zu lassen. Es wurde somit ein einfaches, kostengünstiges und einfach bedienbares Informationsaustauschmodul zwischen Kaffeebehälter und Kaffeemaschine geschaffen.

Je nach Anwendungsbereich umfasst die genannte Einheit das Mahlwerk oder es wird ein konventionelles Mahlwerk verwendet, deren Schnittstelle für die Mahlscheibeneinstellung an die erfindungsgemässe Einheit anzupassen ist. Es wird deshalb auch eine Einheit beansprucht, bei welcher das Mahlwerk nicht Teil der Einheit ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine erste Explosionsdarstellung der Vorrichtung in einer ersten Ausführungsform, mit einem Behältermodul und einem Teil der Kaffeemaschine;
- Figur 2: eine zweite Explosionsdarstellung der Vorrichtung gemäss Figur 1;
- Figur 3: eine Darstellung des Behältermoduls vor Befestigung auf dem in Figur 1 dargestellten Teil der Kaffeemaschine;
- Figur 4: das Behältermodul gemäss Figur 1 im zusammengesetzten Zustand in einer maximalen Dosierposition;
- Figur 5: das Behältermodul gemäss Figur 1 im zusammengesetzten Zustand in einer minimalen Dosierposition;
- Figur 6: einen Längsschnitt durch das Behältermodul gemäss Figur 4;
- Figur 7: einen Längsschnitt durch das Behältermodul gemäss Figur 5;
- Figur 8: eine Ansicht des Behältermoduls gemäss Figur 1 ohne Deckel von oben;
- Figur 9: eine erste perspektivische Darstellung einer Mahlwerkeinstelleinheit;
- Figur 10: eine zweite perspektivische Darstellung der Mahlwerkeinstelleinheit gemäss Figur 9;
- Figur 11: eine Ansicht des Behältermoduls gemäss Figur 1 von unten in einer minimalen Mahlwerk-Einstellposition;
- Figur 12: eine Ansicht des Behältermoduls gemäss Figur 1 von unten in einer maximalen Mahlwerk-Einstellposition;
- Figur 13: eine erste Explosionsdarstellung einer Mühle der Vorrichtung gemäss Figur 1;
- Figur 14: eine zweite Explosionsdarstellung des Teils der Mühle gemäss Figur 13;
- Figur 15: einen Längsschnitt durch einen Teil der Mühle gemäss Figur 13;
- Figur 16a: eine perspektivische Darstellung der Vorrichtung vor der Befestigung des Behältermoduls auf den Teil der Kaffeemaschine gemäss Figur 1;
- Figur 16b: einen Längsschnitt durch die Darstellung gemäss Figur 16a in der Ansicht von hinten;
- Figur 17a: eine perspektivische Darstellung der Vorrichtung nach dem Zusammenfügen von Behältermodul und dem Teil der Kaffeemaschine gemäss Figur 16a;
- Figur 17b: einen Längsschnitt durch die Darstellung gemäss Figur 17a in der Ansicht von hinten;
- Figur 18a: eine perspektivische Darstellung der Vorrichtung in gedrehter Endposition des Behältermoduls auf dem Teil der Kaffeemaschine gemäss Figur 16a;
- Figur 18b: einen Längsschnitt durch die Darstellung gemäss Figur 18a in der Ansicht von hinten;
- Figur 19: eine Ansicht des Behältermoduls gemäss einer zweiten Ausführungsform von unten in einer maximalen Mahlwerk-Einstellposition;
- Figur 20: eine Ansicht des Behältermoduls gemäss Figur 19 von unten in einer minimalen Mahlwerk-Einstellposition;
- Figur 21: eine erste perspektivische Darstellung einer Mahlwerkeinstelleinheit der Ausführungsform gemäss Figur 19;
- Figur 22: eine perspektivische Darstellung des Behältermoduls in der Ausführungsform gemäss Figur 19;
- Figur 23: eine schematische Darstellung einer erfindungsgemässen Einheit;
- Figur 24: eine Seitenansicht eines Behältermoduls gemäss einer dritten Ausführungsform;
- Figur 25: einen Längsschnitt durch das Behältermodul gemäss Figur 24, kombiniert mit einem Mahlwerk;
- Figur 26: einen Längsschnitt durch das Behältermodul gemäss Figur 24 bei maximaler Grösse der Dosierkammer;
- Figur 27: einen Längsschnitt durch das Behältermodul gemäss Figur 24 bei minimaler Grösse der Dosierkammer;
- Figur 28: eine perspektivische Darstellung eines Teils des Portionierers des Behältermoduls gemäss Figur 24;
- Figur 29: einen Längsschnitt durch den Teil gemäss Figur 28;
- Figur 30: eine perspektivische Darstellung eines Teils des Portionierers und von Mitteln zur Einstellung des Mahlgrads des dritten Ausführungsbeispiels;
- Figur 31: eine perspektivische Darstellung des Behältermoduls gemäss Figur 24 von unten;
- Figur 32: eine Ansicht des Behältermoduls gemäss Figur 24 von unten;
- Figur 33: eine perspektivische Darstellung eines Teils der Mittel zur Einstellung des Mahlgrads gemäss der dritten Ausführungsform;
- Figur 34: eine Seitenansicht des Teils gemäss Figur 33,
- Figur 35: eine perspektivische Darstellung eines Behältermoduls gemäss einer vierten Ausführungsform in umgedrehter Position;
- Figur 36a: einen Teil der Elemente für die Mahlgradeinstellung der vierten Ausführungsform gemäss Figur 35 in perspektivischer Darstellung in Kontaktierung mit dem Mitnehmer;
- Figur 36b: den Teil der Elemente gemäss Figur 36a in einer perspektivischen Darstellung vor der Kontaktierung des Mitnehmers;
- Figur 37a: eine perspektivische Darstellung der Elemente gemäss Figur 36a zusammen mit der Modulaufnahme in Kontaktierung mit dem Mitnehmer;
- Figur 37b: eine perspektivische Darstellung der Elemente gemäss Figur 36b zusammen mit der Modulaufnahme vor der Kontaktierung mit dem Mitnehmer;
- Figur 38a: eine Ansicht der Elemente mit der Modulaufnahme gemäss Figur 37a von oben in Kontaktierung mit dem Mitnehmer;
- Figur 38b: eine Ansicht der Elemente mit der Modulaufnahme gemäss Figur 37b von oben vor der Kontaktierung des Mitnehmers;
- Figur 38c: eine Ansicht der Elemente gemäss Figur 36b von oben vor der Kontaktierung des Mitnehmers;
- Figur 39a: einen Längsschnitt durch B-B gemäss Figur 38a;
- Figur 39b: einen Längsschnitt durch A-A gemäss Figur 38b;
- Figur 39c: einen Längsschnitt durch A-A gemäss Figur 38c;
- Figur 40a: einen Längsschnitt durch das Behältermodul gemäss Figur 35 mit einem Einweg- oder Mehrweg-Bohnenbehälter bei minimaler Grösse der Dosierkammer;
- Figur 40b: einen Längsschnitt durch das Behältermodul gemäss Figur 35 mit einem Einweg- oder Mehrweg-Bohnenbehälter bei maximaler Grösse der Dosierkammer;
- Figur 41a: eine perspektivische Darstellung unteren Drehscheibe 21 und des unteren Gehäuseteils sowie einer aktiven Verdrehsicherung;
- Figur 41b: eine perspektivische Darstellung unteren Drehscheibe 21 und des unteren Gehäuseteils sowie der Verdrehsicherung in einer nicht aktiven Position;
- Figur 42a: eine Ansicht der Elemente gemäss Figur 41a von oben;
- Figur 42b: eine Ansicht der Elemente gemäss Figur 41b von oben;
- Figur 43a: einen Längsschnitt durch A-A gemäss Figur 42a;
- Figur 43b: einen Längsschnitt durch A-A gemäss Figur 42b;
- Figur 44a: einen vergrösserten Ausschnitt gemäss Figur 43a;
- Figur 44b: einen vergrösserten Ausschnitt gemäss Figur 43b und
- Figur 45: eine Explosionsdarstellung eines Teils des Portionierers.

### BESCHREIBUNG BEVORZUGTER AUSFÜHRUNGSFORMEN

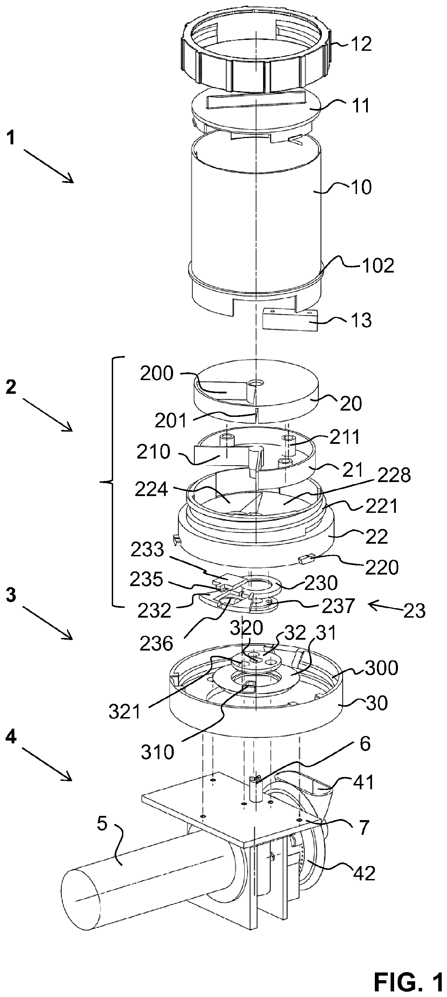

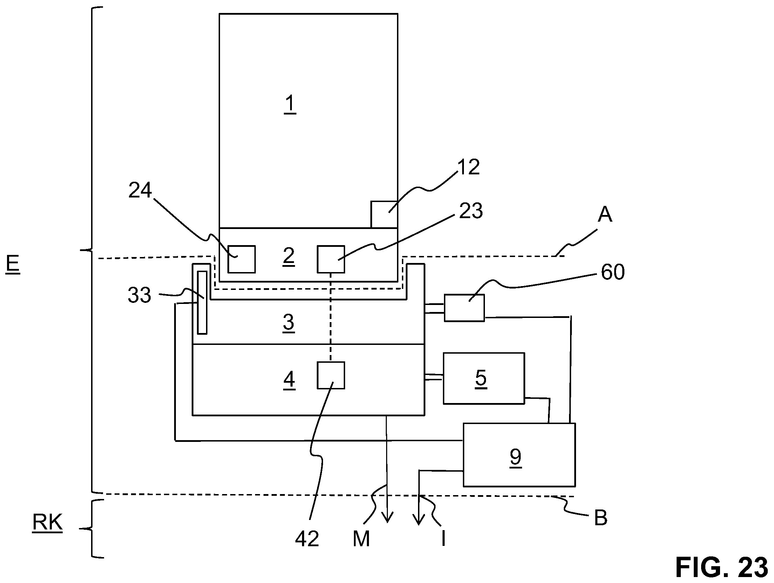

Zuerst wird anhand der schematischen Darstellung gemäss Figur 23 das Erfindungsprinzip beschrieben. Anschliessend werden anhand der Figuren 1 bis 22 und 24 bis 40 bevorzugte Ausführungsformen der Einheit beschrieben.

In Figur 23 ist mit E eine erfindungsgemässe Einheit einer Kaffeemaschine zum Mahlen und Brühen eines Kaffeegetränks bezeichnet. Die Einheit E umfasst einen Kaffeebohnenbehälter 1 und einen daran angeordneten Dosierer, hier Portionierer 2 genannt. Diese zwei Bauteile bilden ein gemeinsames Behältermodul 1, 2. Die restliche Einheit umfasst eine Modulaufnahme 3, ein Mahlwerk 4 und einen ersten Motor 5 zur Betätigung des Mahlwerks 4. Je nach Ausführungsform ist noch ein Antrieb 60, vorzugsweise mit einem separaten zweiten Motor, zur Betätigung des Portionierers 2 sowie eine Steuerung 9 zur Steuerung der Einheit und zur Übermittlung von Signalen an die restliche Kaffeemaschine RK, insbesondere einer nicht dargestellten Brüheinheit, vorhanden.

Das Behältermodul 1, 2 lässt sich auf die restliche Einheit aufsetzen und wieder entfernen. Dies ist durch die symbolische Trennlinie A dargestellt. Die symbolische Trennlinie B zeigt, dass die restliche Einheit zwar Bestandteil der Kaffeemaschine ist und vorzugsweise in deren Gehäuse integriert ist, dass sie jedoch vorzugsweise als eigenständiges Bauteil ausgebildet ist, welches mit geeigneten Schnittstellen in bekannten Kaffeemaschinen verwendet werden kann. Das Behältermodul lässt sich vorzugsweise dicht verschliessen, und eignet sich dadurch auch zur Lagerung von noch ungemahlenen Bohnen.

Das Behältermodul 1, 2, vorzugsweise der Bohnenbehälter 1, weist eine Einstellvorrichtung 12 zur Einstellung der Dosierung auf. Vorzugsweise ist diese manuell betätigbar und wirkt mechanisch auf den Portionierer 2. Andere Lösungen sind jedoch auch möglich, z.B. elektronische oder elektromechanische Lösungen.

Das Behältermodul 1, 2, vorzugsweise der Portionierer 2, weist ferner einen Mahlgrad-Einsteller 23 auf, welcher auf ein Mahlgrad-Veränderungsmittel 42 innerhalb des Mahlwerks wirkt. Auch diese zwei Bauteile können elektronisch und/oder mechanisch wirksam sein. Vorzugsweise wirken sie rein mechanisch.

In einigen Ausführungsformen ist eine Identifikationsmarkierung 24 am Behältermodul 1, 2, hier am Portionierer 2, vorhanden. Das Aufnahmemodul 3 weist ein zugehöriges Lesegerät 33 auf. Es handelt sich beispielsweise um einen Barcode und einen entsprechenden Scanner. Das Lesegerät 33 ist vorzugsweise mit der elektronischen Steuerung 9 der Einheit verbunden, welche auch den Mahlwerkmotor 5 und, falls vorhanden, den elektrischen Antrieb 60 des Portionierers 2 steuert. Alternativ ist anstelle der oder zusätzlich zur Markierung 24 ein beschreibbarer Datenspeicher, beispielsweise ein RFID Tag, auf dem Behältermodul 1, 2 angeordnet, welcher mindestens Informationen zum Mahlgrad enthält.

Vorzugsweise ist das Behältermodul 1, 2 mit Grundinformationen zum Mahlgrad und zur Portionierung versehen, welche ermöglichen, die Einstellungen des Portioniers 2 und des Mahlwerks 4 derart vorzunehmen, dass bereits beim ersten Gebrauch des Behältermoduls 1, 2 ein akzeptabler Kaffee gebrüht wird. Diese Grundinformation lässt sich je nach Ausführungsform vorgängig oder erst nach dem Erstgebrauch vom Benützer ändern.

Die Einstellung des Portioniers 2 führt dazu, dass eine korrekte Menge Kaffeebohnen bereitgestellt wird. Dies erfolgt vorzugsweise erst, wenn das Behältermodul 1, 2 auf die Modulaufnahme 3 aufgesetzt ist und die Kaffeemaschine eingeschaltet wird. Dann betätigt der Antrieb 60 den bereits voreingestellten Portionierer 2.

Beim Verbinden des Behältermoduls 1, 2 mit der restlichen Kaffeemaschine können auch weitere Informationen I gelesen und an die Steuerung 9 übermittelt werden.

Ferner wird beim Verbinden des Behältermoduls 1, 2 mit der restlichen Kaffeemaschine der gewünschte Mahlgrad, welcher am Behältermodul 1, 2 eingestellt wurde, an das Mahlwerk 4 übermittelt und dieses entsprechend eingestellt. Auch hier erfolgt die Wahl der Mahlgrads und Einstellung des Mahlwerks 4 vorzugsweise mit rein mechanischen Mitteln. Elektronische oder elektromechanische Mittel sind jedoch auch einsetzbar.

Nach erfolgtem Mahlen gelangt das Kaffeepulver M zur weiteren Verarbeitung in die restliche Kaffeemaschine RK. Das Behältermodul kann für eine nächste Zubereitung verwendet werden oder es kann entfernt und gelagert werden. Ein zweites Behältermodul 1, 2 mit einer anderen Kaffeebohnensorte lässt sich nun mit der Kaffeemaschine verbinden und eine andere Art Kaffee lässt sich ohne weiteren Aufwand und ohne Geschmacksvermischung mit der vorgängigen Kaffeesorte bereit stellen.

Figur 1 zeigt eine Explosionsdarstellung eines konkreten Beispiels der Einheit bzw. Vorrichtung gemäss einer ersten Ausführungsform.

Der Kaffeebohnenbehälter 1 zur Aufnahme von Kaffeebohnen für mehrere Getränkeportionen weist eine hohlzylinderförmige Dose 10 auf, welche oben mit einem Deckel 11 annähernd luftdicht verschliessbar ist. Der teilweise offene Boden der Dose 10 grenzt an den nachfolgend beschriebenen Portionierer 2 an, welcher die Dose 10 an ihrer Unterseite vorzugsweise annähernd luftdicht verschliesst. Je nach Ausführungsform lässt sie sich mit einem Deckel oder einem entsprechend ausgestalteten Verschlussmittel luftdicht verschliessen. Die Einheit, gebildet durch Kaffeebohnenbehälter 1 und Portionierer 2, eignet sich somit zur Lagerung von Kaffeebohnen.

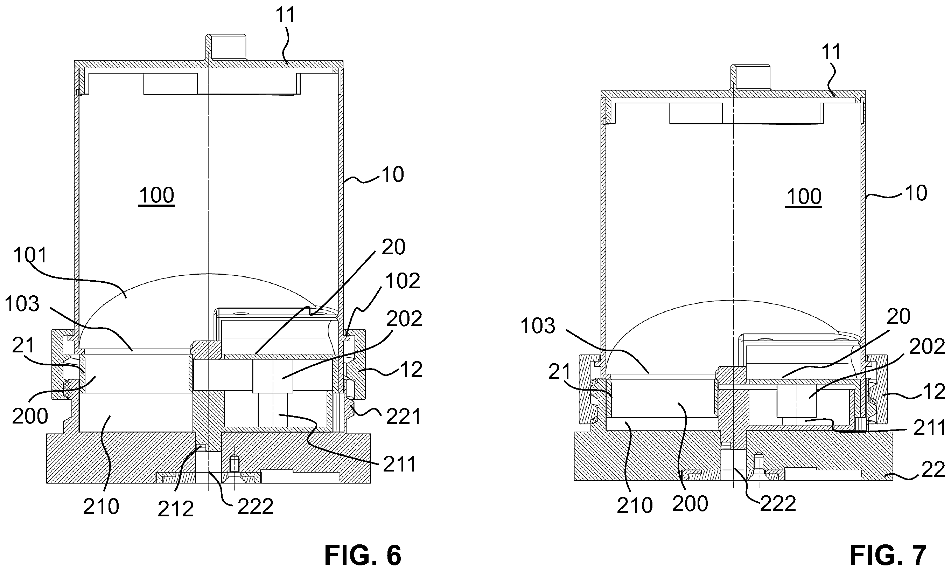

Am Deckel 11 ist ein Griffelement 110 angeordnet, um den Deckel 11 leichter anheben und verschliessen zu können. Die Einstellvorrichtung 12 ist vorzugsweise ein Einstellrad, hier Einstellring 12 genannt. Der Einstellring 12 ist über die Dose 10 gestülpt und liegt auf einem umlaufenden Absatz 102 der Dose 10 auf. Die Dose 10 weist einen unteren Boden 101 auf, welcher bis auf eine Auslassöffnung, hier Dosenauslass 103 genannt, geschlossen ausgebildet ist. Dieser Dosenauslass 103 ist vorzugsweise kreissektorförmig ausgebildet. Der Boden 101 ist vorzugsweise mindestens teilweise als Schrägfläche ausgebildet und zum Dosenauslass 103 hin geneigt, so dass alle im Innenraum 100 der Dose 10 befindlichen Kaffeebohnen ohne aktive Fördermittel zum Dosenauslass 103 hin geführt werden. Der Innenraum100, der Boden 101 sowie der Dosenauslass 103 sind beispielsweise in Figuren 6, 7 sowie 16a bis 18b gut erkennbar. Am Rand des Dosenauslasses 103 ist am Boden 101 eine flexible, vorzugsweise weiche Ausweichlippe 13 angeordnet. Sie ist in Figur 1 als noch nicht montiertes Bauteil dargestellt. Hinter der Ausweichlippe 13 ist genügend freier Platz vorhanden, damit geklemmte Kaffeebohnen ausweichen können und nicht festklemmen oder gar gebrochen werden.

Unterhalb des Kaffeebohnenbehälters 1 ist die Dosiereinheit, hier Portionierer 2 genannt, angeordnet. Sie ermöglicht die Zuführung einer genau dosierten Menge an ungemahlenen Kaffeebohnen in das nachfolgend angeordnete Mahlwerk 4. Vorzugsweise entspricht die dosierte Menge einer einzigen Getränkeportion, d.h. diejenige Menge an Bohnen, welche für das Aufbrühen von gemahlenem Kaffeepulver für eine einzige Kaffeetasse benötigt wird. Dabei ist der Portionierer 2 einstellbar, um je nach Kaffeesorte und/oder je nach Gusto des Kaffeetrinkers die Dosiermenge zu ändern.

Der Portionierer 2 ist in diesem Beispiel mit einer durch Drehbewegung einstellbaren Dosierkammer ausgebildet. Der Portionierer 2 weist eine obere Drehscheibe 20 auf, welche einen in sich geschlossenen ringförmigen Mantel aufweist. Die obere Drehscheibe 20 weist eine nach oben gerichtete geschlossene plane Deckfläche auf mit Ausnahme eines ersten Kreissektors, welcher als Durchgangsöffnung ausgebildet ist. Dieser erste Kreissektor bildet ein oberes Kammerteil 200.

Der Portionierer 2 weist ferner eine untere Drehscheibe 21 auf, welche eine nach unten gerichtete plane Bodenfläche aufweist, welche ebenfalls bis auf einen zweiten Kreissektor geschlossen ausgebildet ist. Der zweite Kreissektor der unteren Drehscheibe 21 bildet ein unteres Kammerteil 210. Die untere Drehscheibe 21 bildet eine Aufnahme für die obere Drehscheibe 20. Die obere Drehscheibe 20 weist hierfür im Bereich des ersten Kreissektors Aufnahmeschlitze 201 auf, so dass sie sich über die untere Drehscheibe 21 stülpen lässt. Die untere Drehscheibe 21 weist nach oben gerichtete Federhalter 211 auf, welche hülsenförmig ausgebildet und vorzugsweise mit Federn versehen sind, die sich gegenüber der nach unten gerichteten Innenseite der oberen Drehscheibe 20 abstützen. Vorzugsweise weist die obere Drehscheibe 20 entsprechende fixierende Aufnahmen für die Enden der Federn auf und/oder entsprechende Führungsmittel 202, wie beispielsweise Stifte oder Hülsen, zur führenden Verbindung mit den Federhaltern 211. Ein derartiges Führungsmittel 202, welches gleichzeitig als Aufnahme für die Feder dient, ist in den Figuren 6 und 7 erkennbar.

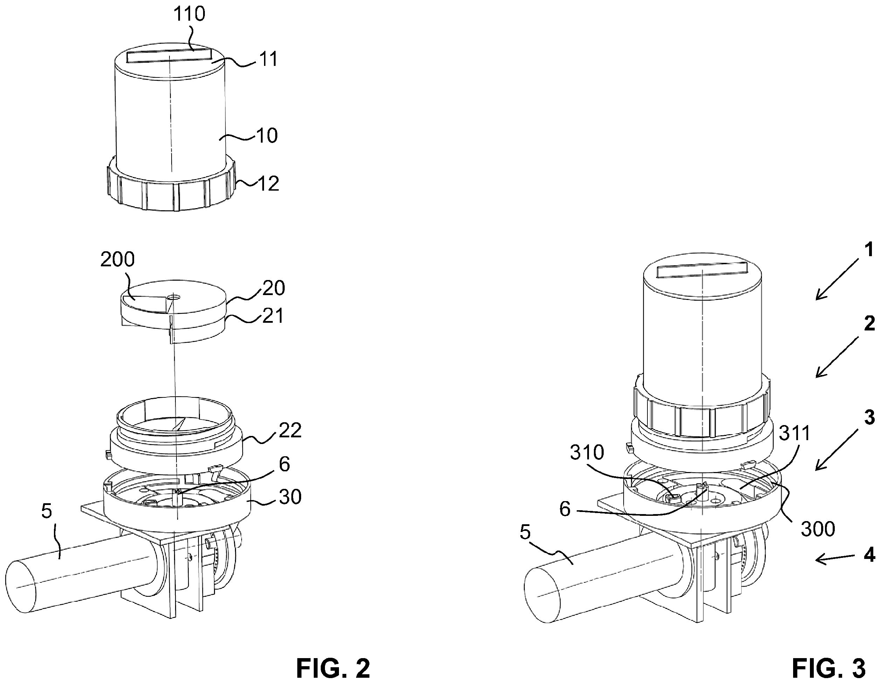

Die obere und die untere Drehscheibe 20, 21 sind somit drehfest miteinander verbunden, wobei ihr Abstand geführt veränderbar ist. Die Führung erfolgt durch die Federhalter 211 und die Führungsmittel 202. Die Rückstellkraft wird durch die darin gehaltenen Federn sichergestellt. In Figur 2 sind die zwei Drehscheiben 20, 21 im zusammengesetzten Zustand dargestellt. Auch ist in dieser Figur 2 der Einstellring 12 in der gebrauchsbereiten Position an der Dose 10 gehalten.

Die zwei Drehscheiben 20, 21 sind in einem Boden 22 des Portioniers 2 angeordnet, welcher in Figur 1 gut erkennbar ist. Der Boden ist in diesem Beispiel ebenfalls kreisförmig ausgebildet. Er weist einen unteren Grundring mit radial vorstehenden Einrastnasen 220 sowie einen oberen Gewindering mit einem kleineren Durchmesser als der Grundring auf. Der Gewindering des Bodens 22 ist mit einem Aussengewinde 221 versehen. Der Grundring des Bodens 22 ist bis auf einen Kammerauslass 224 nach unten geschlossen ausgebildet. Der Boden 22 ist nach oben offen ausgebildet, wobei er eine nach oben gerichtete Grundfläche aufweist, welche bis auf den Kammerauslass eine ebene Fläche 228 bildet. Diese Fläche 228 bildet den unteren Abschluss der Dosierkammer, d.h. ihren Boden. Die zwei Drehscheiben 20, 21 lassen sich gemeinsam relativ zum Boden 22 des Portioniers 2 drehen, so dass je nach Stellung die Verbindung zwischen den zwei Kammerteilen 200, 210 mit dem Dosenauslass 103 oder mit dem Kammerauslass 224 geschaffen ist.

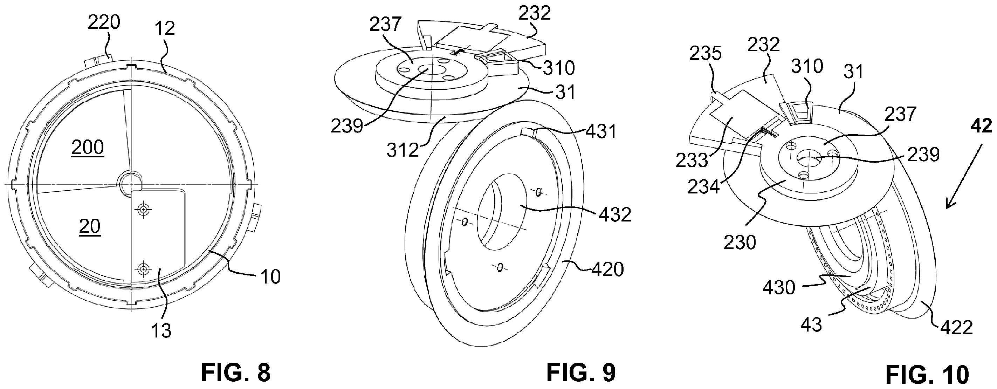

Auf der nach aussen gerichteten Unterseite des Bodens 22 des Portionierers 2 ist, wie ebenfalls in Figur 1 erkennbar ist, der Mahlgrad-Einsteller 23 angeordnet. Er weist einen Drehring 230 mit einem radial davon in derselben Ebene abstehenden Arm 232 auf. Im Arm 232 ist ein Fenster 236 vorhanden, in welchem eine Verschiebeplatte 233 radial verschiebbar gehalten ist. Die Verschiebeplatte 233 weist auf einer Stirnseite einen Zahn 235 auf und sie steht auf einer gegenüberliegenden Stirnseite an einer Druckfeder 234 an (siehe Figur 10). Auf der unteren Seite des Drehrings 230 ist eine Befestigungsscheibe 237 vorhanden, welche durchgehende, über den Umfang verteilte Befestigungslöcher 238, hier genau drei Löcher, sowie eine zentrale erste Antriebsachsendurchgangsöffnung 239 aufweist.

Die hier genannten Elemente, d.h. der Kaffeebohnenbehälter 1 sowie der Portionierer 2, welcher auch den Mahlgrad-Einsteller 23 umfasst, bilden gemeinsam das Behältermodul 1, 2. Dieses Behältermodul 1, 2 lässt sich auf der ebenfalls in Figur 1 dargestellten Modulaufnahme 3 befestigen.

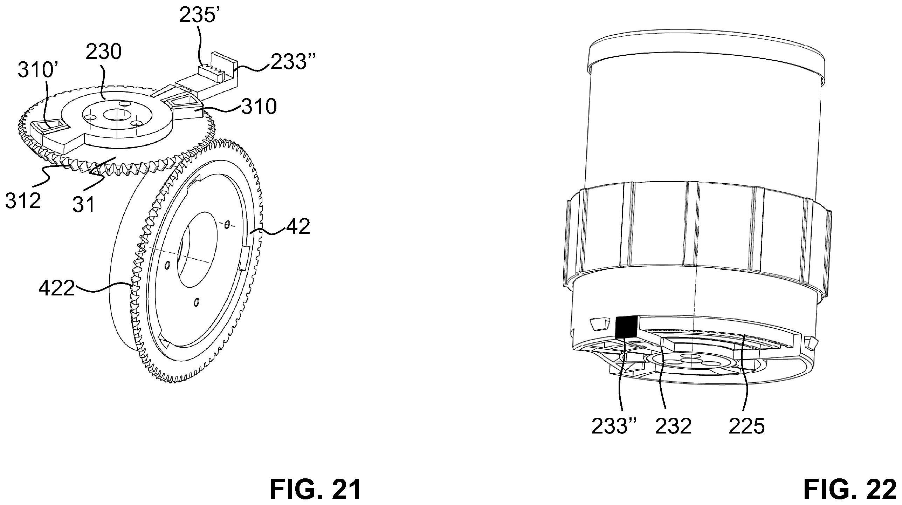

Die Modulaufnahme 3 weist einen Aufnahmekörper 30 auf, welcher kreiszylinderförmig ausgebildet ist und eine nach oben offene Schale bildet. Der umlaufende Mantel der Modulaufnahme 3 weist einen Bajonettverschluss 300 auf. Im Boden der Modulaufnahme befindet sich ein zentrisches Loch, in welchem eine ringförmige Einstellscheibe 31 angeordnet ist. Die ringförmige Einstellscheibe 31 weist ein Kegelrad 312 eines Kegelzahnradgetriebes auf, wie dies in Figur 9 gut erkennbar ist. In Figur 9 sind die Zähne nicht dargestellt. Die Verzahnung des Kegelzahnradgetriebes ist jedoch in Figur 21 gut erkennbar. Wie ebenfalls in den Figuren 9 und 10, jedoch auch in Figur 1, erkennbar ist, ist auf der Einstellscheibe 31 ein nach oben gerichteter Mitnehmer 310 angeordnet. Im freien Zentrum der Einstellscheibe 31 ist eine Fixierscheibe 32 angeordnet, welche eine zentrische zweite Antriebsachsen-Durchgangsöffnung 320 und mit den Befestigungslöchern 238 der Befestigungsscheibe 237 fluchtende Durchgangslöcher 321 (siehe Figur 1) aufweist. Der Boden der Modulaufnahme 3 ist bis auf die genannten Öffnungen und eine azentrisch angeordnete Bohnen-Durchgangsöffnung 311 vorzugsweise geschlossen ausgebildet (siehe Figur 3).

Die Modulaufnahme 3 ist mit dem Mahlwerk 4 vorzugsweise fest verbunden. Die Modulaufnahme 3 und das Mahlwerk 4 sind vorzugsweise Bestandteile einer Kaffeemaschine. Die Kaffeemaschine kann vollautomatisch sein. Sie kann eine Maschine für einen professionellen Einsatz, beispielsweise in einem Kaffeehaus oder einem Restaurant, oder für den privaten Heimgebrauch sein. Die Kaffeemaschine kann jedoch auch ein Halbautomat oder eine relativ einfach aufgebaute elektrische Maschine für den Heimgebrauch sein.

Die Maschine ist nicht vollständig dargestellt. Die nicht gezeigten Teile sind übliche bekannte Bauteile einer derartigen Kaffeemaschine. Es ist hier lediglich eine Grundplatte 7 eines Gehäuses einer derartigen Kaffeemaschine gezeigt. Die Grundplatte 7 kann die Oberfläche der Kaffeemaschine bilden oder vertieft im Gehäuse der Maschine angeordnet sein. Auf dieser Grundplatte 7 ist die Modulaufnahme 3 mit entsprechenden Schrauben oder anderen bekannten Befestigungsmitteln befestigt. An der Grundplatte 7 ist ebenfalls das Mahlwerk 4 fixiert. Dies ist in Figur 1 gut erkennbar. In anderen Ausführungsformen sind Teile der Modulaufnahme 3 oberhalb der Grundplatte angeordnet und andere Teile unterhalb, d.h. innerhalb des Gehäuses der Kaffeemaschine. Insbesondere kann die Einstellscheibe 31, auch Zustellrad zum Mahlwerk 4 genannt, innerhalb des Gehäuses angeordnet sein.

Das Mahlwerk 4 wird weiter unten im Text noch genauer beschrieben. Es weist, wie in Figur 1 erkennbar ist, einen Bohneneinlass 41 sowie das Mahlwerksveränderungsmittel auf, hier in Form einer Überwurfmutter 42. In dieser Überwurfmutter 42 sind die später beschriebenen, vertikal ausgerichteten Mahlscheiben 430, 440 angeordnet. Das Mahlwerk 4 ist mit dem ersten Motor, d.h. dem Mahlwerkmotor 5 verbunden. Er ist vorzugsweise ein Elektromotor.

Ebenfalls in Figur 1 ist eine Antriebsachse 6 erkennbar, welche durch die Grundplatte 7 nach oben ragt und im zusammengebauten Zustand durch die zweite Antriebsachsendurchgangsöffnung 320 der Modulaufnahme 30 ragt. Sie durchsetzt bei aufgesetztem Behältermodul 1, 2 die erste Antriebsachsendurchgangsöffnung 239 sowie eine dritte Antriebsachsendurchgangsöffnung 222 des Bodens 22 des Portionierers 2 und wird in einer ersten Antriebsachsenaufnahme 212 der unteren Drehscheibe 21 drehfest aufgenommen (siehe Figuren 6, 16b und 17b). Vorzugsweise ist die Antriebsachsenaufnahme 212 als Klauenkupplung ausgebildet.

In Figur 3 ist gut erkennbar, wie das Behältermodul 1, 2 auf die Modulaufnahme 3 aufsetzbar ist und somit mit dem Mahlwerk 4 der Kaffeemaschine verbindbar ist.

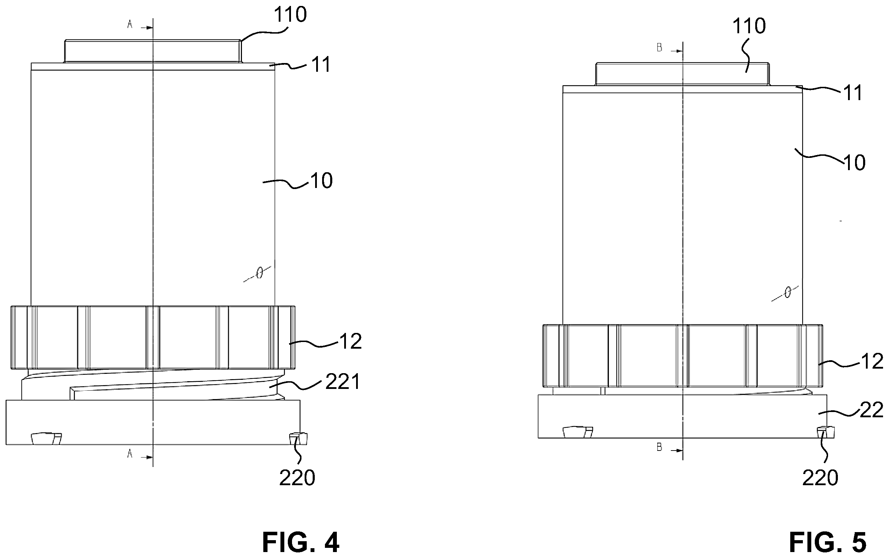

Anhand der Figuren 4 bis 8 lässt sich aufzeigen, wie die Einstellung der Dosierung erfolgt. Durch manuelle Drehung des Einstellrings 12 entlang des Gewindes 221 des Bodens 22 des Portionierers 2 lässt sich der Abstand der oberen Drehscheibe 20 zur unteren Drehscheibe 21 wählen. Damit der Benützer einen Hinweis erhält, welche Stellung er gewählt hat oder wählen könnte, ist auf dem Mantel der Dose 10, vorzugsweise oberhalb des Drehrings 12, eine Skala vorhanden oder es sind sonstige Markierungen angebracht. Diese sind in den Figuren nicht dargestellt.

In der Position des Drehrings 12 gemäss den Figuren 4 und 6 ist eine Dosierkammer mit maximalem Volumen dargestellt. Wie in Figur 6 gut erkennbar ist, liegen der obere Kammerteil 200 und der untere Kammerteil 210 übereinander und greifen kaum ineinander.

In den Figuren 5 und 7 ist der Drehring 12 nach unten gedreht, wodurch er auch die Dose 10 mit sich gezogen hat. Die Dose 10 hat sich dabei nicht mitgedreht, da sie gegenüber dem Boden 22 verdrehgesichert ist. Zudem liegt der Drehring 12 auf dem Absatz 102 auf und ist relativ zu diesem drehbar. Die Dose 10 hat dabei die obere Drehscheibe 20 nach unten gegen die untere Drehscheibe 21 gedrückt. Das obere Kammerteil 200 wurde in das untere Kammerteil 210 hineingeschoben. Dadurch wurde die gesamte Dosierkammer verkleinert und minimiert, wie dies in Figur 7 gut erkennbar ist. Die Bewegung des Einstellrings 12 hat somit lediglich die relative axiale Lage der zwei Drehscheiben 20, 21 zueinander verändert. Die Drehscheiben 20, 21 wurden jedoch nicht gedreht. Der Drehring 12 und somit die gewählte Dosiereinstellung lassen sich mit bekannten Mitteln in ihrer Position halten, beispielsweise mittels einer Feder und einer Kugel bzw. einem Kugeldruckstück.

In diesem Ausführungsbeispiel lassen sich mittels der Veränderung der Grösse der Dosierkammer 200, 210 Dosierungen im Bereich von 5 bis 20 g Bohnen, vorzugsweise von 7 bis 15 g Bohnen, erreichen. Durch Wahl von anderen Abmessungen oder anderen Formen der Kammerteile lassen sich auch andere Bereiche erzielen.

In Figur 8 ist das Behältermodul 1, 2 ohne Deckel 11 von oben gesehen dargestellt. Gut erkennbar ist die obere Drehscheibe 20 mit dem kreissektorförmigen Ausschnitt, welcher das obere Kammerteil 200 bildet.

Die Einstellung und somit die Wahl der Dosiermenge erfolgt vorzugsweise manuell durch Drehung des Einstellrings 12. Dadurch verändert sich die Grösse der Dosierkammer.

Die Dosierung, d.h. das Abmessen der gewünschten Bohnenmenge für das nachfolgende Mahlen und die nachfolgende Kaffeezubereitung, erfolgt in einer einfachen Ausführungsform ebenfalls manuell, indem die Kammer 200, 210 zuerst in eine Befüllposition zur Befüllung mit Bohnen aus der Dose 10 und anschliessend in eine Entleerungsposition, also in eine offene Stellung über den Bohneneinlass 41 des Mahlwerks 4, gedreht wird.

Vorzugsweise erfolgt diese Dosierung jedoch automatisch, wenn die Kaffeemaschine betätigt wird, um eine Portion Kaffee aufzubrühen. Vorzugsweise ist der Portionierer 2 hierfür elektrisch angetrieben. Hierzu ist die Antriebsachse 6 vorzugsweise mit dem zweiten Motor oder Antrieb 60, welcher in Figur 23 dargestellt ist, verbunden. Der zweite Motor ist vorzugsweise innerhalb des Gehäuses der Kaffeemaschine angeordnet und wird über die elektronische Steuerung der Maschine betätigt. Soll ein Kaffee gebrüht werden, so wird zuerst diese Antriebsachse 6 betätigt. Da sie mit der unteren Drehscheibe 21 drehfest verbunden ist, dreht sie somit die untere und obere Drehscheibe 21, 20 und auch die Dosierkammer 200, 210 mit. Zuerst wird die Kammer 200, 210 in eine Position gebracht, in welcher sie gegenüber dem Innenraum 100 der Dose 10 offen ist, so dass Kaffeebohnen über die Schrägfläche 101 in die Kammer 200, 210 rutschen, bis diese voll ist. Die Dosierung erfolgt dabei über die voreingestellte Grösse der Kammer 200, 210. Es sind keine Sensoren oder andere Messmittel hierzu notwendig. Anschliessend werden die obere und die untere Drehscheibe 20, 21 mit ihrer befüllten Kammer 200, 210 gedreht, bis die nach unten offene Kammer 200, 210 über dem Kammerauslass 224 des Bodens 22 des Portionierers 2 zu liegen kommt. Die Kaffeebohnen rutschen nun aus der Kammer 200, 210 heraus und durch den Bohneneinlass 41 in das Mahlwerk 4 hinein. Bereits vorgängig, erst zu diesem Zeitpunkt oder kurz danach wird das Mahlwerk 4 nach Massgabe der elektronischen Steuerung der Kaffeemaschine betätigt.

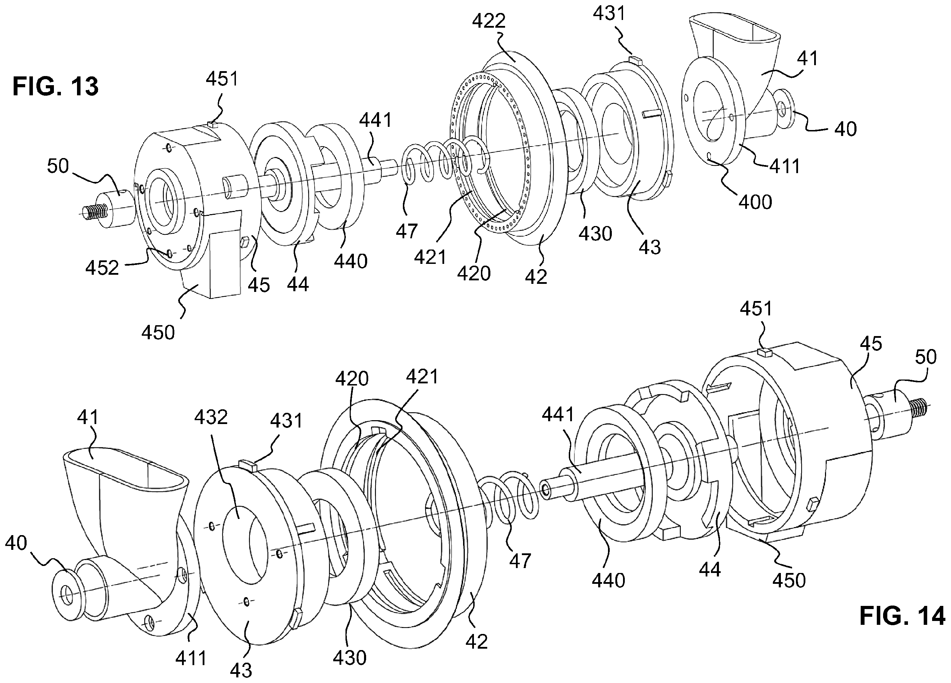

Im Folgenden wird anhand der Figuren 13 bis 15 das Mahlwerk 4 beschrieben. Es weist den bereits erwähnten Bohneneinlass 41 auf, welcher in diesem Beispiel in Form eines gebogenen Einwurfkanals 410 weitergeführt ist. Dieses Bauteil weist einen Flansch 411 mit in Figur 13 dargestellten Befestigungslöchern 400 zur Befestigung an einem Festscheibenflansch 43 auf. Auf der gegenüberliegenden Seite des vorzugsweise einstückigen Bauteils ist ein Gegenlager 40 ausgebildet zur Aufnahme und Lagerung eines Förderrotors 441. Der Förderrotor 441 ist an seinem gegenüberliegenden Ende über eine Verbindungsmutter 50 mit einer Antriebswelle des Mahlwerkmotors 5 verbunden.

Im Festscheibenflansch 43 ist die feste Mahlscheibe 430 drehfest gehalten. Der Festscheibenflansch 43 weist, wie auch die übrigen nachfolgend beschriebenen Bauteile des Mahlwerks 4, eine zentrale Durchgangsöffnung 432 auf, welche vom Förderrotor 441 durchsetzt ist. Der Festscheibenflansch 43 weist radial vorstehende Nasen 431 auf, welche in einer ersten Nut 420 eines Bajonettverschlusses der Überwurfmutter 42 eingreifen. Die erste Nut 420 des Bajonettverschlusses liegt in Bezug auf die axiale Querschnittsfläche der Überwurfmutter 42 auf einer schiefen Ebene, d.h. in einem Winkel zum Förderrotor 441. Dadurch wird bei einer Drehung der Überwurfmutter 42 der Festscheibenflansch 43 gemeinsam mit der festen Mahlscheibe 430 axial verschoben, jedoch werden sie nicht gedreht. Da der Bohneneinlass 41 ebenfalls fest mit dem Festscheibenflansch 43 verbunden ist, wird auch der Bohneneinlass 41 gemeinsam mit dem Festscheibenflansch 43 axial verschoben. Diese Drehung der Überwurfmutter 42 erfolgt, wie bereits anhand der Figuren 9 und 10 beschrieben wurde, beim Aufsetzen und Fixieren des Behältermoduls 1, 2 auf der Modulaufnahme, da dadurch die Einstellscheibe 31 in eine vordefinierte Position gedreht wird und die Überwurfmutter 42 antreibt.

Wie in den Figuren 13 und 14 ersichtlich ist, folgt anschliessend an die feste Mahlscheibe 430 eine rotierende Laufmahlscheibe 440, welche in einem Laufscheibenflansch 44 drehfest gehalten ist. Der Laufscheibenflansch 44 ist fest mit dem Förderrotor 441 verbunden oder sogar, wie hier dargestellt, gemeinsam mit dem Förderrotor 441 als einstückiges Bauteil ausgebildet.

Der Laufscheibenflansch 44 ist drehbar in einem Mahlgehäuse 45 gehalten. Dieser weist eine nach unten gerichtete Durchgangsöffnung 450 sowie radial nach aussen vorstehende Nasen 451 auf. Die Nasen 451 greifen in eine zweite Nut 421 der Überwurfmutter 42 ein, so dass das Mahlgehäuse 45 in der Überwurfmutter 42 gehalten ist, wobei es relativ zu dieser drehbar ist. Die zweite Nut 421 verläuft in einer Ebene senkrecht zum Förderrotor 441, so dass sich der Laufscheibenflansch 44 und die darin gehaltene Laufmahlscheibe 440 während der Drehung nicht axial bewegen.

Das Mahlgehäuse 45 des Mahlwerks 4 ist starr positioniert und mittels Befestigungslöchern 452 mittelbar oder unmittelbar mit der Grundplatte 7 verbunden. Das Mahlgehäuse 45 weist einen nach unten gerichteten Kaffeepulverauslass 450 auf, welcher in eine hier nicht dargestellte Brüheinheit der Kaffeemaschine führt.

Zwischen Gegenlager 40 und dem Laufscheibenflansch 44 ist vorzugsweise eine Förderfeder 47, vorzugsweise in Form einer Spiralfeder, angeordnet. Die Förderfeder 47, insbesondere in ihrer als Spiralfeder ausgebildeten Form, dient zur Förderung der Kaffeebohnen innerhalb des Mahlwerks 4. Alternativ oder zusätzlich lässt sich der Förderrotor 441 mit einer Förderschnecke ausbilden, um die Kaffeebohnen innerhalb des Mahlwerks 4 zu fördern.

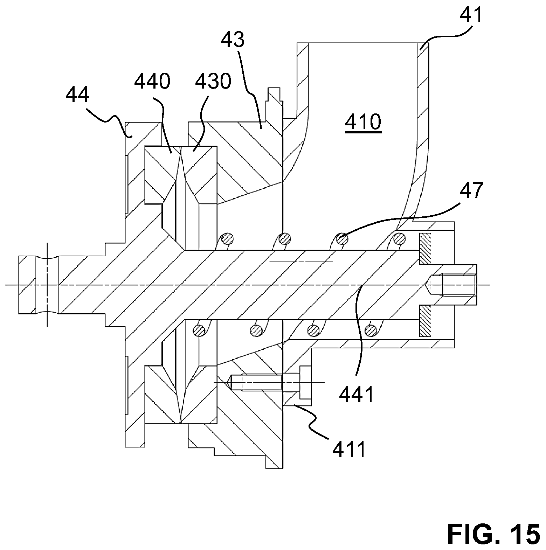

Zu beachten ist, dass sich der Förderrotor 441 und vorzugsweise auch die Förderfeder 47 bis in den gebogenen Einwurfkanal 410 erstrecken, wie dies in Figur 15 gut erkennbar ist. So werden die Kaffeebohnen bereits beim Einlass in das Mahlwerk 4 optimal gefördert. Die Förderfeder 47 ist mit dem Förderrotor 441 vorzugsweise verdrehsicher verbunden, z.B. mittels Haken an der Förderfeder 47, oder anderweitig mechanisch befestigt.

Das Mahlwerk 4 lässt sich nun mittels des Mahlgrad-Einstellers 23, auch Mahlwerkeinsteller genannt, auf einen gewünschten Mahlgrad einstellen. Dies wird nachfolgend anhand der Figuren 9 bis 12 erläutert.

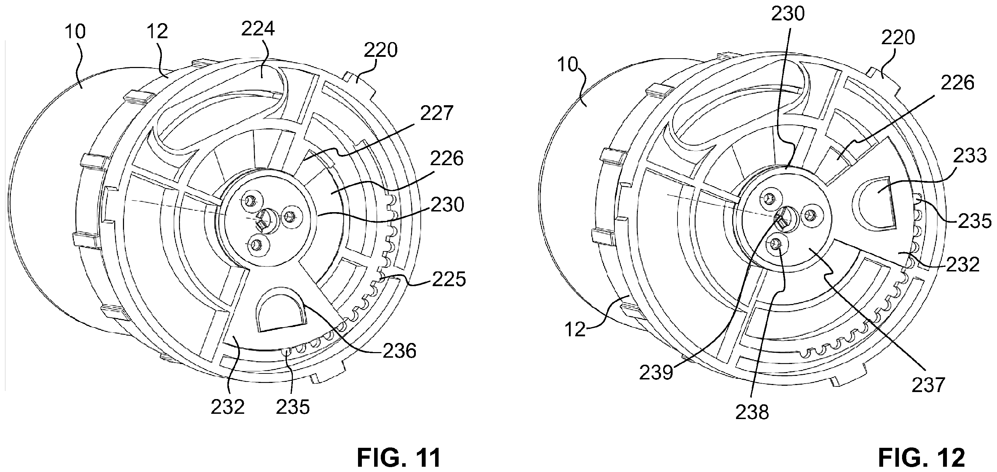

Die Figuren 11 und 12 zeigen das Behältermodul 1, 2 von unten. Gut erkennbar ist der Kammerlauslass 224, welcher sich azentrisch im Bereich des äusseren Umfangs befindet. Der Boden ist bis auf die bereits genannte erste Antriebsachsen-Durchgangsöffnung 239 ansonsten geschlossen ausgebildet. Er ist hier aus herstelltechnischen Gründen mit Stegen und Rippen versehen. Andere Ausgestaltungen der Unterseite des Bodens sind möglich. Ebenfalls gut erkennbar ist der Arm 232, welcher nun im Vergleich zur Darstellung gemäss den Figuren 9 und 10 von der anderen Seite dargestellt ist. Durch das Fenster 236 ist ebenfalls die auf dieser Seite vertieft angeordnete Verschiebeplatte 233 erkennbar.

Diese Unterseite weist eine Anschlagrasterung auf, welche die oben genannte Verschiebeplatte 233 und einen Zahnteilkranz 225 umfasst. In diesen Zahnteilkranz 225 ist der Zahn 235 der Verschiebeplatte 233 in Eingriff bringbar. Hierzu wird die Verschiebeplatte 233 manuell entgegen der Federkraft der Druckfeder 234 nach hinten zur Längsmittelachse der Vorrichtung hin geschoben, so dass der Zahn 235 aus der Verzahnung gelöst wird. Die Verschiebeplatte 233 wird dann gemeinsam mit dem Drehring 230 um die Längsmittelachse geschwenkt, die Verschiebeplatte 233 wird vom Benützer losgelassen und der Zahn 235 wird in einer gewünschten Position wieder mit dem Zahnteilkranz 225 in Eingriff gebracht. Die verschiedenen Drehpositionen des Zahns 235 resultieren bei zusammengebauter Vorrichtung in verschiedenen Stellungen der Mahlscheiben 430, 440 des Mahlwerks 4, wie weiter unten im Text erläutert ist. Um die entsprechenden Mahlscheiben-Einstellungen zu erkennen, ist vorzugsweise entlang des Zahnteilkranzes 225 eine entsprechende Markierung angebracht. Diese ist hier nicht dargestellt.

An einem Ende, hier dem oberen Ende des Zahnteilkranzes 225, befindet sich eine Mitnehmernut 226 zur Aufnahme des Mitnehmers 310 der Einstellscheibe 31 der Modulaufnahme 3.

Die Betätigung der Verschiebeplatte 233 und somit die Einstellung entlang des Zahnteilkranzes 225 erfolgt, indem ein Benützer einen seiner Finger durch das Fenster 236 auf die Verschiebeplatte 233 setzt, diese leicht hinunterdrückt und nach hinten zur Längsmittelachse hin verschiebt. Ist die gewünschte Drehposition des Zahns 235 erreicht, zieht der Benützer seinen Finger zurück und gibt die Verschiebeplatte 233 wieder frei, so dass der Zahn 235 in der gewünschten Position einrasten kann.

In Figur 11 ist die Position dargestellt, in welcher die Mahlscheiben 430, 440 nach der Befestigung des Behältermoduls in einem maximalen Abstand zueinander stehen und in welcher somit ein grobkörniges Kaffeepulver erhalten wird. In Figur 12 ist die Position dargestellt, in welche die Mahlscheiben 430, 440 nach der Befestigung des Behältermoduls in einem minimalen Abstand zueinander stehen und in welcher somit ein feinkörniges Kaffeepulver erhalten wird. Wie anhand der Vielzahl der Zähne des Zahnteilkranzes 225 erkennbar ist, sind mehrere Zwischenstellungen möglich und somit kann eine sehr feine Abstufung des Mahlgrads erreicht werden. Vorzugsweise lässt sich der Abstand zwischen den Mahlscheiben 430, 440 in einem Bereich von 100µm auf 800µm, vorzugsweise von circa 250 µm auf circa 600 µm und noch bevorzugter von circa 200 µm auf circa 600 µm, ändern.

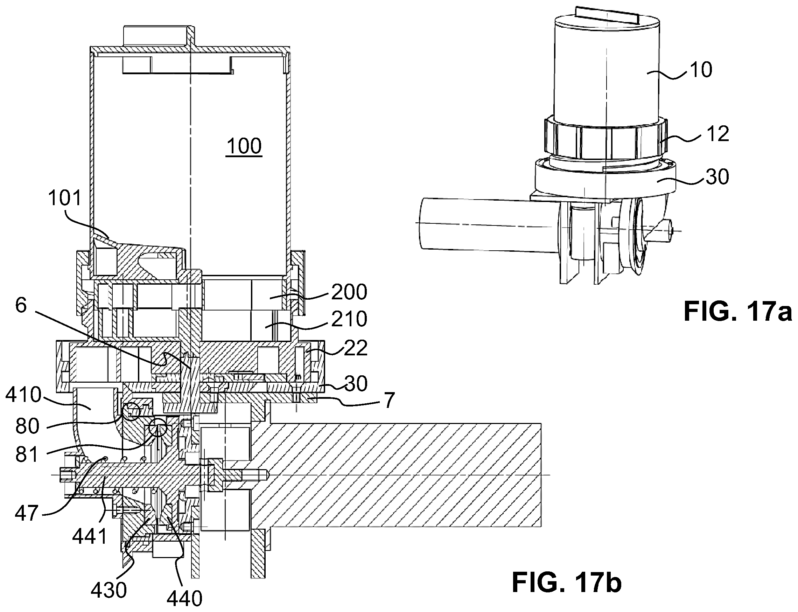

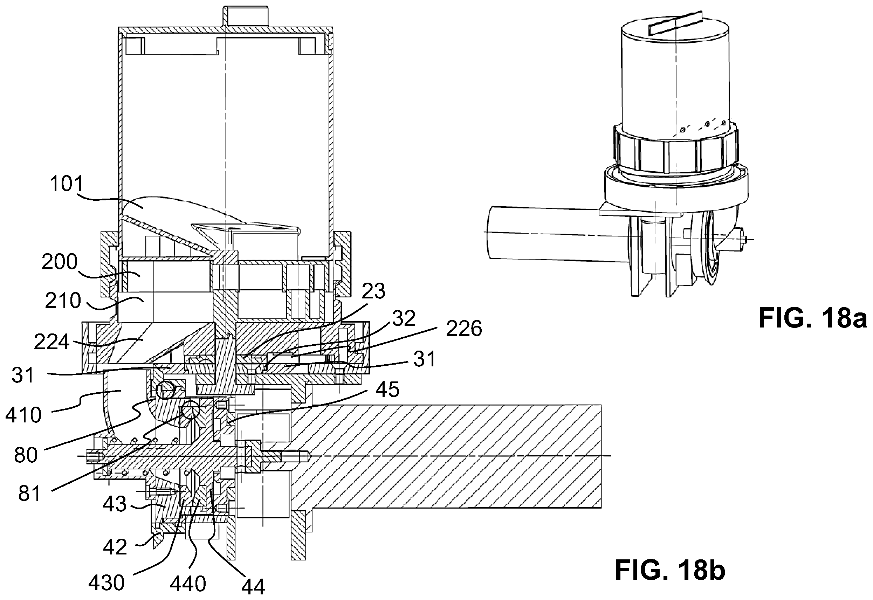

In den Figuren 9 und 10 ist nun erkennbar, wie sich die verschiedenen Drehpositionen des Zahns 235 auf das Mahlwerk 4 auswirken. Wird das Behältermodul 1, 2 auf die Modulaufnahme 3 aufgesetzt, so erfolgt dies vorzugsweise mittels des Bajonettverschlusses 300 der Modulaufnahme 3 und der dazugehörigen Einrastnasen 220 des Portionierers 2. Dadurch kommt der Mahlgrad-Einsteller 23 auf die Einstellscheibe 31 zu liegen. Für die Erstellung der Bajonettverschluss-Verbindung wird das Behältermodul 1, 2 innerhalb der Modulaufnahme 3 gedreht, vorzugsweise um 90°, wie dies durch die Zusammenschau der Figuren 17a und 18a erkennbar ist. Durch die Drehung des Behältermoduls 1, 2 wird auch der Drehring 230 mit seinem Arm 232 mitgedreht. Sobald der Arm 232 am Mitnehmer 310 ansteht, dreht sich die Einstellscheibe 31 ebenfalls mit, und zwar bis zur Drehposition, welche durch die Einstellungen des Armes 232 vorgegeben wird.

Das erste Kegelrad 312 der Einstellscheibe 31 wird somit ebenfalls gedreht und wickelt sich entlang dem zweiten Kegelrad 422 der Überwurfmutter 42 ab. Durch die Abwicklung, insbesondere durch die Kegelverzahnung wird die Überwurfmutter 42 gedreht.

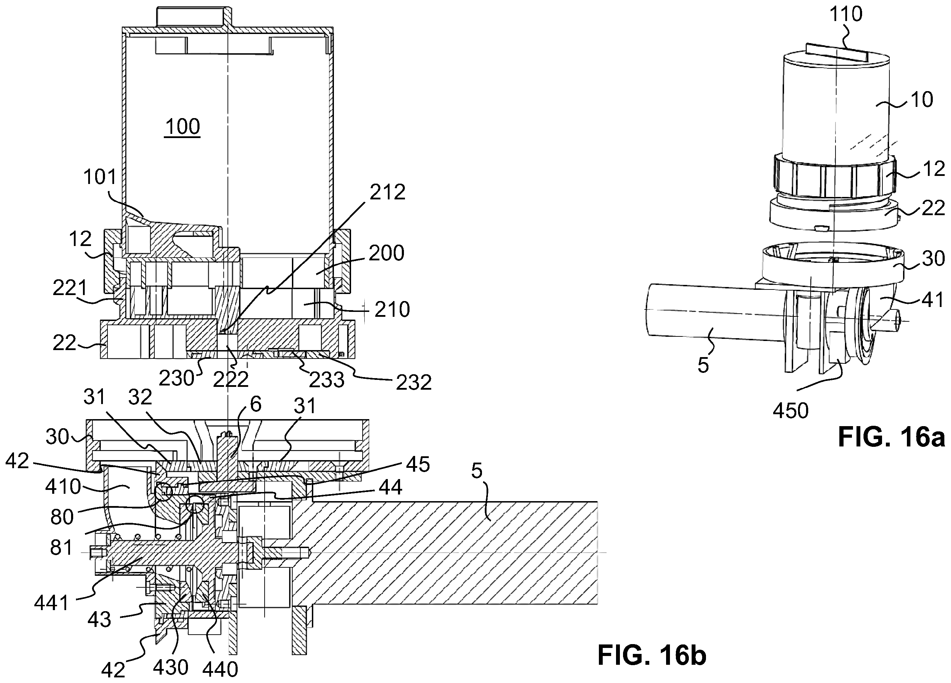

Die Drehung der Überwurfmutter 42 hat zur Folge, dass sich der Festscheibenflansch 43 gemeinsam mit der Festmahlscheibe 430 axial in Richtung Laufmahlscheibe 440 bewegt. Der Abstand zwischen dem Festscheibenflansch 43 und dem Laufscheibenflansch 44 wird kleiner. Dieser Abstand wird hier als erster Abstand 80 bezeichnet und er ist in den Figuren 16b, 17b und 18b erkennbar. Dadurch wird auch ein zweiter Abstand 81 zwischen der Festmahlscheibe 430 und der Laufmahlscheibe 440 kleiner.

Da der Förderrotor 441 axial verschiebbar im Gegenlager 40 gehalten ist, verschiebt sich der Förderrotor 441 nicht.

Je grösser nun der Weg ist, auf welchem der Mitnehmer 310 vom Arm 232 mitgenommen werden kann, umso länger kann sich die Überwurfmutter 42 drehen und umso weiter kann sie den Festscheibenflansch 43 axial zum Laufscheibenflansch 44 hin bewegen. Umso kleiner wird somit der Abstand zwischen den zwei Mahlscheiben 430 und 440 und umso feiner ist der eingestellte Mahlgrad. In der Einstellung gemäss Figur 11 ist der Weg des Mitnehmers relativ kurz, in der Einstellung gemäss Figur 12 ist er relativ lang.

Die Verschiebung des Bohneneinlasses 41 gemeinsam mit dem Festscheibenflansch 43 ist in dieser Ausführungsform aufgrund der sehr kompakten Bauweise vorhanden. In anderen Ausführungsformen lässt sich eine derartige Verschiebung vermeiden. Falls der Bohneneinlass 41 axial verschoben wird, ist er vorzugsweise genügend gross ausgebildet, damit er in allen Verschiebepositionen eine der Grösse des Bohnenauslasses 224 entsprechende Grösse einer Aufnahmeöffnung bildet.

Bei Entfernung des Behältermoduls bewegen sich die Mahlscheiben 430, 440 vorzugsweise in eine Grundeinstellung.-In dieser Grundeinstellung befinden sich die Mahlscheiben 430, 440 in einem maximalen Abstand voneinander. Die Grundeinstellung der Mahlscheiben 430, 440 lässt sich beispielsweise mittels einer Rückstellfeder erreichen, sobald das Behältermodul 1, 2 entfernt wird und somit die Überwurfmutter 42 von der Einstellscheibe 31 freigegeben wird. Die Grundeinstellung lässt sich auch über einen Rückstellmotor oder durch andere Mittel erreichen. Die Mahlscheiben 430, 440 lassen sich bei erneutem Befestigen des Behältermoduls wieder in den gewünschten Abstand zueinander bringen.

Vorzugsweise werden die Antriebsspindel und somit das Mahlwerk nach Beendigung des Mahlvorgangs noch über einen vorbestimmten Zeitraum weiterbetrieben, um alles Kaffeepulver aus dem Mahlwerk 4 heraus zu fördern. Dieser Betrieb kann mit gleicher oder mit einer anderen Drehzahl erfolgen.

Die Zusammenschau der Figuren 16a bis 18b zeigt die verschiedenen Positionen der einzelnen Bauteile und ihrer Elemente vor dem Aufsetzen des Behältermoduls 1, 2 (Figuren 16a, 16b), kurz nach dem Aufsetzen in noch nicht gedrehter Position (Figuren 17a und 17b) sowie nach erfolgter Drehung des Behältermoduls 1, 2, so dass sich die Mahlscheiben 430 und 440 in gewünschtem Abstand voneinander befinden sowie nach erfolgter Betätigung der Antriebsachse 6, so dass sich auch die Kammer 200, 210 des Portioniers 2 bereits über dem Bohneneinlass 41 des Mahlwerks 4 befindet (Figuren 18a und 18b).

Nach Beendigung des Brühvorgangs lässt sich das Behältermodul 1, 2 wieder einfach entfernen, verschliessen und für den nächsten Gebrauch aufbewahren, z.B. im Kühlschrank. Die Einstellungen zur Dosierung und zum Mahlgrad können unverändert beibehalten oder bei Bedarf geändert werden. Anschliessend lässt sich ein zweites oder drittes Behältermodul, welches gleich aufgebaut, aber mit einer anderen Sorte Kaffeebohnen befüllt und/oder eine andere Einstellung zur Dosierung und/oder eine andere Einstellung zum Mahlgrad aufweist, mit der Modulaufnahme verbinden und eine andere Kaffeesorte kann ohne weitere Einstellungen seitens des Benützers mit passender Dosierung und passendem Mahlgrad sofort und ohne Beeinträchtigung des Aromas durch den Vorgängerkaffee gebrüht werden.

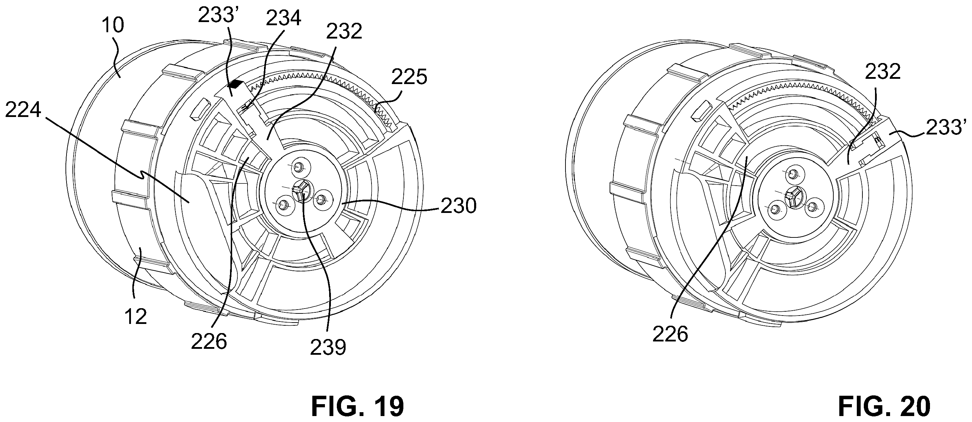

In den Figuren 19 bis 22 ist eine zweite Ausführungsform dargestellt. Diese Ausführungsform ist im Wesentlichen gleich ausgestaltet wie die erste Ausführungsform. Die Einstellung des Mahlgrades erfolgt nun jedoch seitlich am Behältermodul 1, 2. Wie in Figur 21 erkennbar ist, ist wiederum ein Kegelzahnradgetriebe vorhanden mit einem ersten Kegelrad 312 und einem zweiten Kegelrad 422. Auch der Drehring 230 und der daran radial vorstehende Arm 232 sind vorhanden. Am Arm 232 ist gefedert ein Winkelelement 233' angeordnet, wobei das Winkelelement 233' einen Schenkel 233" aufweist, welcher nach oben gerichtet ist und am äusseren Umfang des Behältermoduls 1, 2 anliegt Dies ist in den Figuren 19 und 22 gut erkennbar. Am Winkelelement 233' ist eine gekrümmte Zahnstange 235' angeordnet, welche mit dem Zahnteilkranz 225 in Eingriff bringbar ist. Sie ersetzt somit den Zahn 235 des ersten Beispiels. Auch hier wird dadurch die Bewegung der Einstellscheibe 31 vorbestimmt und somit der Mahlgrad eingestellt. Die Einstellscheibe 31 verfügt in diesem Beispiel über zwei einander diametral gegenüberliegende Mitnehmer 310, 310'. Es lässt sich jedoch auch hier nur ein Mitnehmer verwenden bzw. auch im ersten Beispiel können zwei Mitnehmer vorhanden sein. Wie in Figur 22 gut erkennbar ist, lässt sich nun der Mahlgrad einstellen und die Mahlwerkseinstellung definieren, indem der Schenkel 233" des Winkelelements 233' von aussen radial nach innen gedrückt wird und der Arm 232 mit dem Drehring 230 das Winkelelement 23" um einen bestimmten Winkel verschoben wird. Vorzugsweise ist benachbart zum Schenkel 233" eine Markierung oder eine Skala auf dem Umfang des Behältermoduls 1, 2 angeordnet.

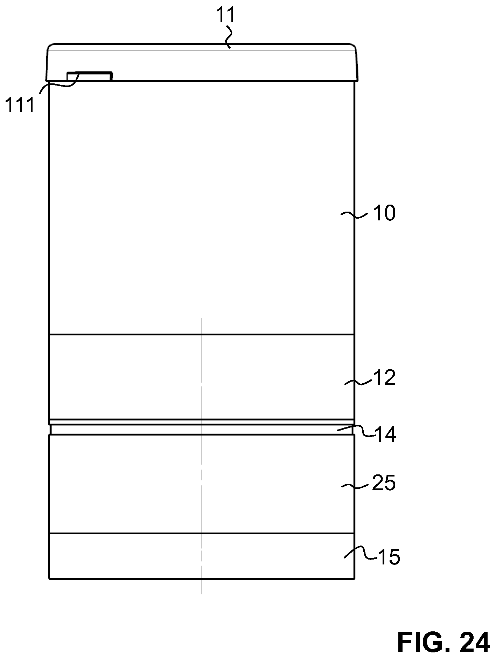

In den Figuren 24 bis 33 ist eine weitere bevorzugte Ausführungsform der Vorrichtung dargestellt. Die Einstellungen und die Übertragung der Einstellungen auf den Portionierer und das Mahlwerk erfolgen in diesem Beispiel wiederum rein mechanisch. Es ist jedoch auch möglich, lediglich den Portionierer oder das Mahlwerk mechanisch einzustellen oder die eine Einstellung mechanisch zu übertragen und die andere Einstellung bzw. Übertragung elektronisch bzw. mittels Datentransfer vorzunehmen. Die Vorrichtung ist im Wesentlichen gleich ausgebildet wie oben beschrieben, so dass die obige Offenbarung auch auf dieses Ausführungsbeispiel zutrifft, sofern nicht nachstehend erläuterte oder in den Figuren sichtbare Unterschiede vorhanden sind.

Das Behältermodul gemäss Figur 24 weist einen Kaffeebohnenbehälter 1 mit einer Dose 10 zur Aufnahme von noch nicht gemahlenen Kaffeebohnen sowie einen die Dose 10 vorzugsweise luftdicht verschliessenden Deckel 11 auf. Der Deckel 11 weist in diesem Beispiel ein radial vorstehendes Drückerelement 111 auf. Der Portionierer 2 und der Mahlgradeinsteller 23 sind in bzw. an einem mittleren Gehäuseteil 14 angeordnet, welches mit der Dose 10 vorzugsweise fest verbunden ist. Vorzugsweise ist es mit dieser verschraubt. Das mittlere Gehäuseteil 14 weist vorzugsweise einen kleineren Aussendurchmesser auf als die Dose 10. Es ist von einem unteren und einem oberen Einstellring 12, 25 umgeben. Ein unteres Gehäuseteil 15 ist von unten fest mit dem mittleren Gehäuseteil 14 verbunden. Vorzugsweise ist es mit diesem verschraubt. Je nach Ausführungsform ist die Verbindung lösbar und wieder neu erstellbar oder nicht zerstörungsfrei trennbar.

Das Behältermodul 1, 2 ist im Wesentlichen kreiszylinderförmig ausgebildet und weist vorzugsweise einen über die gesamte Höhe gleichbleibenden Aussendurchmesser auf. Lediglich der Deckel 11 weist je nach Ausführungsform einen anderen Aussendurchmesser auf.

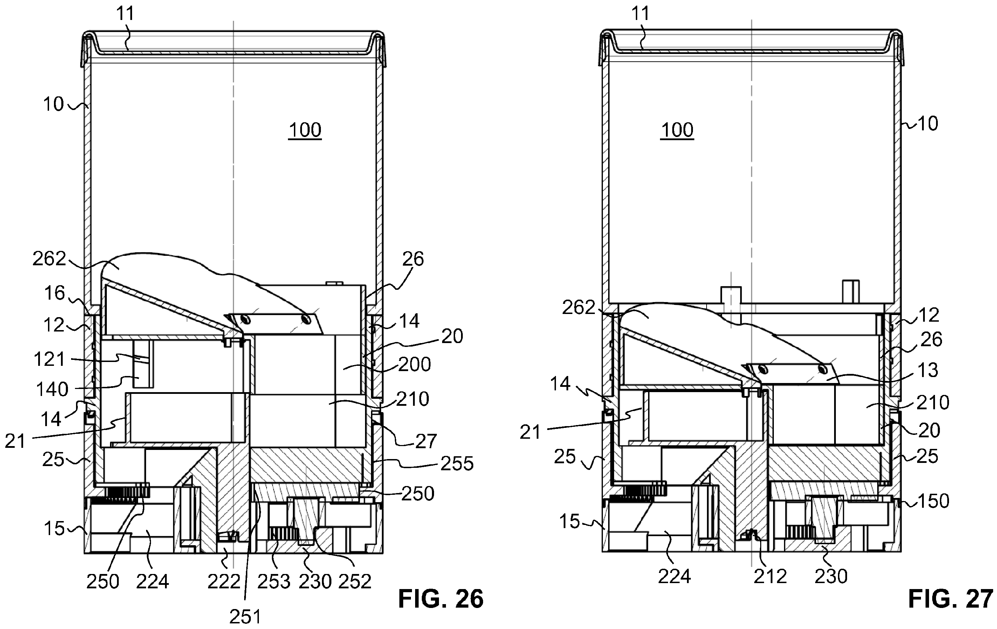

Mittels des oberen Einstellrings 12 lässt sich die zu mahlende Portionenmenge wählen, mittels des unteren Einstellrings 25 lässt sich der Mahlgrad wählen. Der obere Einstellring 12 verändert sich in seiner Höhe vorzugsweise nicht, der untere Einstellring 25 muss je nach Ausführungsform vorzugweise angehoben oder hinuntergezogen werden, bevor er sich drehen lässt. Mindestens eine Blattfeder 27, welche zwischen unterem und oberen Einstellring 25, 12 angeordnet ist, sichert die Rückstellung des unteren Einstellrings 25 in seine untere Position bei Nichtgebrauch. Vorzugsweise ist die Blattfeder 27 zwischen dem unteren Einstellring 25 und radial einem vorstehenden Rand des unteren Gehäuseteils 15 eingeklemmt. Dies ist in Figur 26 erkennbar.

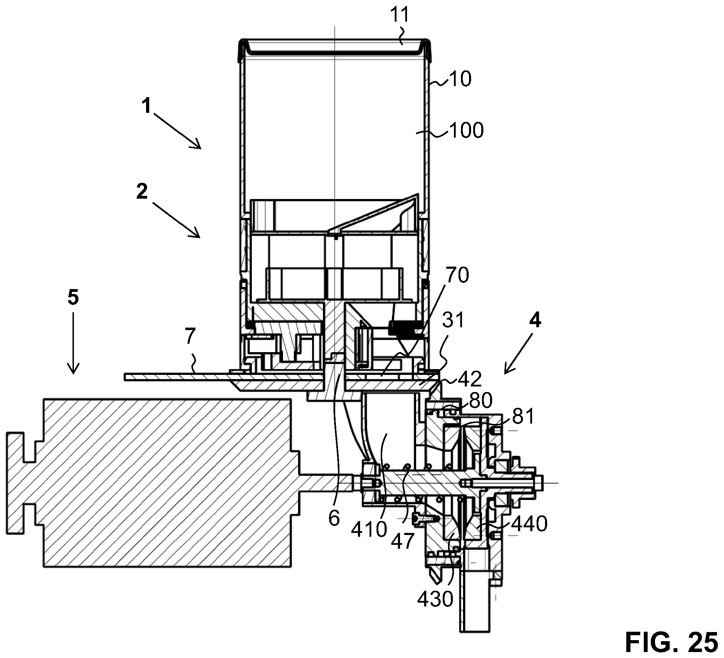

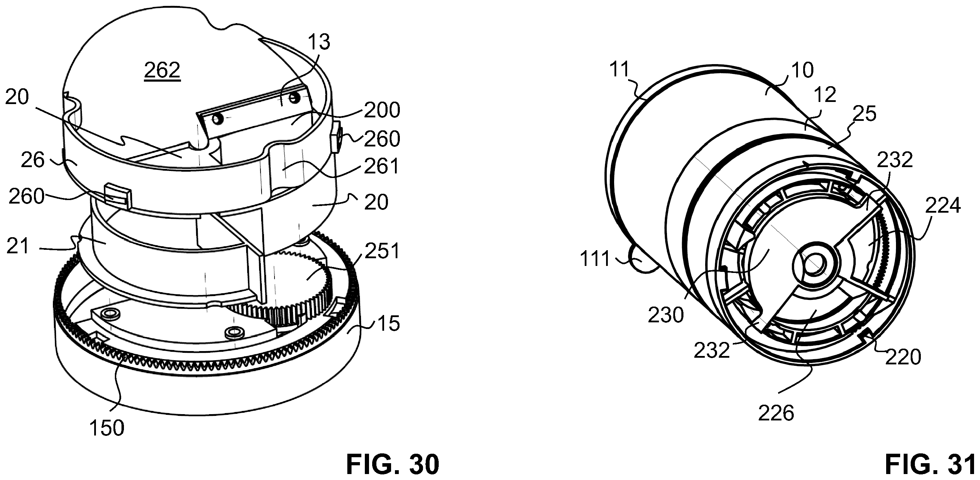

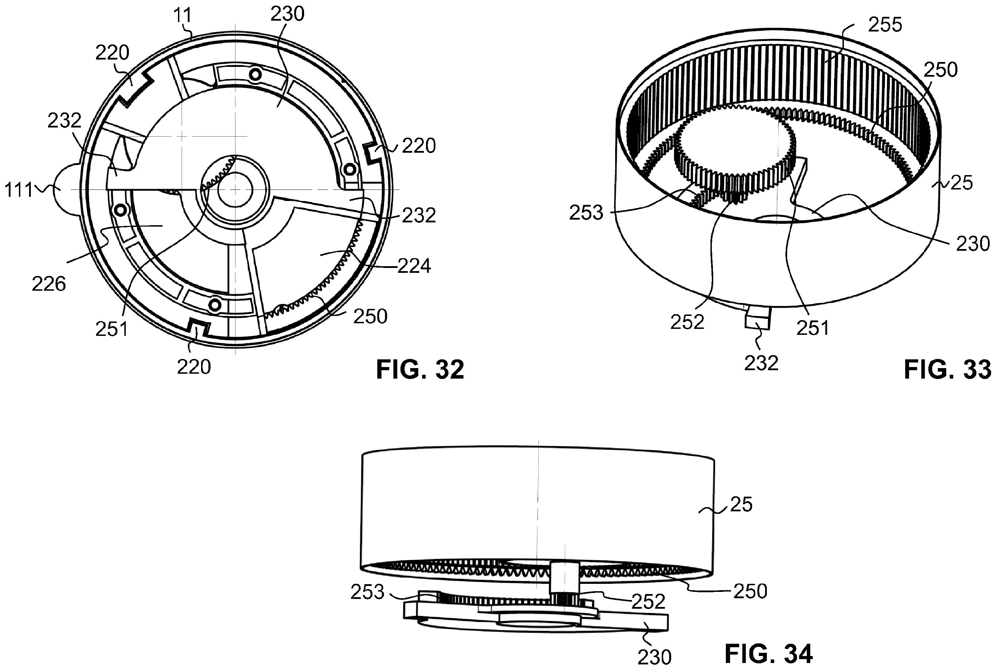

Das Behältermodul 1, 2 lässt sich wiederum auf einer Modulaufnahme 3 einer Kaffeevorrichtung befestigen. Dies ist in Figur 25 dargestellt. Die Einrastnasen 220 sind in diesem Beispiel radial nach innen gerichtet, wie dies in den Figuren 31 und 32 gut erkennbar ist. Das Mahlwerk 4 und der Mahlwerkmotor 5 sind in Figur 25 dargestellt und werden nicht nochmals im Detail beschrieben. In dieser Ausführungsform führt der Einwurfkanal 410 jedoch von der Längsmittelsachse des Behältermoduls nach aussen und das Mahlwerk 4 ist entsprechend nicht benachbart zu dieser Längsmittelachse L sondern peripher zum Behältermodul 1, 2 angeordnet. Entsprechend ist der Mahlwerkmotor 5 auf der gegenüberliegenden Seite angeordnet. Die mechanische Kopplung 31, 42 der Mahlwerkeinstellung mit dem Mahlwerk 4 erfolgt ebenfalls peripher zum Behältermodul. Diese Anordnung erleichtert die Anpassung an bestehende Kaffeevorrichtungen.

Der Portionierer 2 ist auch in diesem Beispiel über die Antriebsachse 6 mit einem Antrieb, z.B. einem Elektromotor, verbunden, wie dies in Figur 25 dargestellt ist. In den Figuren 26 und 27 sind die dazugehörige erste und dritte Antriebsachsenaufnahme 212, 222 bezeichnet. Auch in diesem Beispiel wird mittels des oberen Einstellrings 12 die Grösse der Dosierkammer 200, 210 gewählt, falls diese nicht schon durch vorherigen Gebrauch des Behältermoduls auf die gewünschte Grösse eingestellt ist. Wird das Behältermodul 1, 2 auf die Kaffeevorrichtung aufgesetzt und die Kaffeevorrichtung betätigt, so dreht der Antrieb 60 die gefüllte Dosierkammer 200, 210 zum Kammerauslass 224 und entlässt die zu mahlende Bohnenportion durch den Einwurfkanal 410 in das Mahlwerk 4.

Die Dosierkammer 200, 210 wird wiederum durch die obere und untere Drehschreibe 20, 21 gebildet, welche relativ zueinander in axialer Richtung verschiebbar sind. Über der oberen Drehschreibe 20 ist ein oberes Dosierteil 26 angeordnet, welches ebenfalls in axialer Richtung relativ zur unteren Drehscheibe 21 verschiebbar ist. Das obere Dosierteil 26 und die obere Drehscheibe 20 bilden gemeinsam ein oberes Kammerteil, die untere Drehscheibe 21 bildet ein unteres Kammerteil. Je nach Ausbildung des oberen Dosierteils 26 ist dieses zwar gemeinsam mit der unteren Drehscheibe 20 axial verschiebbar, hat jedoch keinen Anteil am Volumen der oberen Dosierkammer 200. Je nach Ausbildung des Dosierteils 26 ist es nicht Teil des oberen Kammerteils, es lässt sich jedoch axial verschieben, um die obere Drehscheibe 21 axial zu verschieben.

Vorzugsweise bildet der untere Bereich des mittleren Gehäuseteils 14 den Boden des Portioniers und somit die nach oben gerichtete plane Fläche 228, welche je nach Drehposition der Dosierkammer diese Kammer nach unten verschliesst. Der Kammerauslass 224 führt durch das mittlere Gehäuseteil 14 und das untere Gehäuseteil 15 nach unten. In anderen Ausführungsformen ist der Boden des Portionierers durch das untere Gehäuseteil 15 oder ein anderes Bauteil gebildet.

Um die Grösse der Dosierkammer 200, 210 zu verändern, lässt sich der Einstellring 12 relativ zur Dose 10 drehen. Das obere Dosierteil 26 bildet vorzugsweise einen unteren Abschluss der Dose 10, .d.h. einen beweglichen Boden 262 der Dose 10. Am beweglichen Boden 262 ist vorzugsweise wiederum die Ausweichlippe 13 angeordnet. Das obere Dosierteil 26 ist vorzugsweise im mittleren Gehäuseteil 14 angeordnet.

Das obere Dosierteil 26 weist an seinem Umfang nach aussen vorstehende Aussengewindeabschnitte 260 auf (Figur 30), welche in ein Innengewinde 121 des Einstellrings 12 eingreifen (Figur 26). Diese Aussengewindeabschnitte 260 durchsetzen dabei Fenster 140 des mittleren Gehäuseteils 14. Bei Drehung des oberen Einstellrings 12 entlang dieser Fenster 140 wird das obere Dosierteil 26 nach unten bzw. nach oben geschoben, die obere Drehscheibe 20 wird ebenfalls nach unten bzw. nach oben verschoben und der Abstand zur unteren Drehscheibe 21 sowie die Grösse der Dosierkammer 200, 210 verändert sich.

Des Weiteren sind am Umfang des Dosierteils 26 Ausnehmungen oder Einbuchtungen 261 vorhanden. Diese ermöglichen einen Freiraum für hier nicht dargestellten Schraubendöme zur Verbindung der Dose 10 mit dem mittleren Gehäuseteil 14. Durch Drehung des oberen und unteren Kammerteils 20, 21 mittels des Antriebs 6 lässt sich die gefüllte Dosierkammer 200, 210 bei Betrieb in das Mahlwerk 4 entleeren. Das obere Dosierteil 26 wird dabei vorzugsweise nicht mitgedreht.

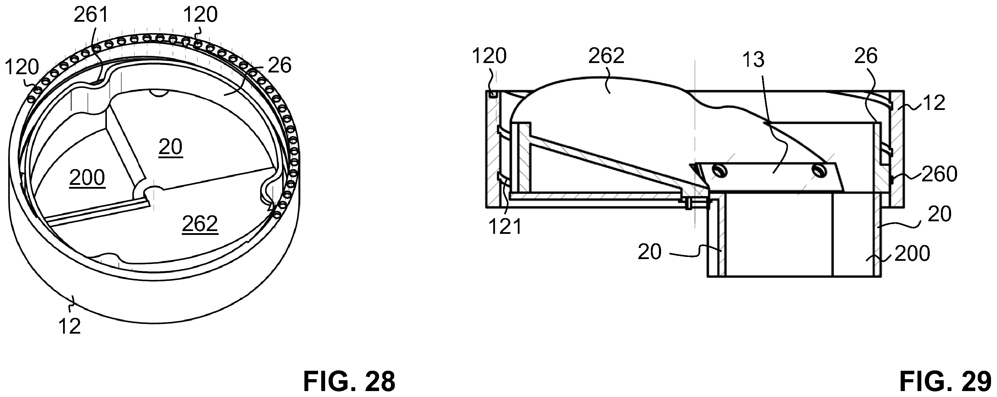

Damit eine einmal gewählte Dosierung bei Entfernung des Behältermoduls von der Kaffeevorrichtung nicht unbeabsichtigt verstellt werden kann, ist vorzugsweise eine Fixierung des Einstellrings 12 vorgesehen. In dieser Ausführungsform weist der Einstellring 12 hierzu kreisförmige Löcher oder Vertiefungen 120 auf seiner oberen Stirnseite auf, wie dies in Figur 28 erkennbar ist. Die Vertiefungen 120 können über den gesamten Umfang verteilt angeordnet sein oder sich nur in einem Abschnitt davon befinden, wie dies hier dargestellt ist. Auf der unteren Stirnseite der Dose 10 ist mindestens eine gefedert gelagerte Kugel 16 vorhanden, welche beim Drehen des Einstellrings 12 angehoben wird und in Ruheposition gefedert in eine der Vertiefungen 120 abgesenkt ist und so den Einstellring 12 in seiner Drehposition fixiert. Dies ist in den Figuren 28 und 26 erkennbar, wobei die Kugel 16 lediglich durch Angabe des Bezugszeichens dargestellt ist. Vorzuweise sind mehrere derartiger Kugeln 16 vorhanden.

Diese Ausführungsform hat den Vorteil, dass bei der Einstellung der Dosiermenge, die Dose 10 oder der Portionierer 2 nicht mitgedreht werden müssen. Lediglich der Einstellring 12 wird für die Wahl der zu mahlenden Kaffeebohnenmenge gedreht. Zudem können die Rückstellfedern und somit die Federhalter 211 entfallen. Der werkseitige Zusammenbau ist somit vereinfacht und die Herstellungs- sowie Materialkosten sind minimiert. Vorteilhaft ist ferner, dass der obere Einstellring 12 fluchtend mit der Mantelfläche der Dose 10 ausgebildet sein kann.

Die Einstellung des Mahlgrads erfolgt neu ebenfalls mittels eines Drehrings, nämlich mittels des unteren Einstellrings 25. Die Übertragung dieser Einstellung auf das Mahlwerk erfolgt vorzugsweise wie bisher rein mechanisch über die Einstellscheibe 31 auf das zweite Kegelrad 422 der Überwurfmutter 42 und somit auf das Mahlwerk 4 (siehe Figur 25). Die Einstellscheibe 31 weist wiederum den Mitnehmer 310 auf, an welchem der Arm 232 des Drehrings 230 ansteht. Der Drehring 230 ist in den Figuren 31 bis 34 gut erkennbar.

In diesem Beispiel ist die Einstellscheibe 31 innerhalb der Grundplatte 7 des Gehäuses der Kaffeemaschine angeordnet. Die Grundplatte 7 weist hierfür eine Durchgangsöffnung 70 für den Mitnehmer 310 auf.

Die Mahlgradeinstellung weist hier im Gegensatz zu den oben beschriebenen Ausführungsbeispielen eine Übersetzung auf, welche zwischen dem unteren Einstellring 25 und Drehring 230 angeordnet ist. Der drehbare untere Einstellring 25 weist einen unteren Innenzahnkranz 250 auf, welcher sich beim Drehen des unteren Einstellrings 25 entlang eines Zahnrads mit einer Aussenverzahnung 251 abwickelt. Konzentrisch mit dieser Aussenverzahnung, jedoch koaxial versetzt dazu, ist eine weitere Aussenverzahnung 252 mit kleinerem Aussendurchmesser fest verbunden. Dieses wickelt sich an einer Innenverzahnung 253 des Drehrings 230 ab, dreht den Drehring 230 entsprechend der Drehung des unteren Einstellrings 25 und bestimmt so Position des Arms 232 des Drehrings 230. Dadurch wird der mögliche Weg des Mitnehmers 310 bestimmt und dadurch die Einstellung des Mahlwerks 4. Die Innenverzahnung 253 ist vorzugsweise auf einem der Grundfläche des Drehrings 230 axial vorstehenden Teilkreis angeordnet. Auch der Drehring 230 ist vorzugsweise als Teilkreis ausgebildet.

Damit sich eine gewählte Einstellung des Mahlgrades bei Entfernung des Behältermoduls 1, 2 von der Kaffeevorrichtung und während der anschliessenden Lagerung des Behältermoduls 1, 2 nicht ungewollt verändern kann, weist das untere Gehäuseteil 15 auf seiner oberen Stirnseite eine Verzahnung 150 auf, in welche entsprechende Gegenformen an der unteren Stirnfläche des unteren Einstellrings 25 eingreifen. Dies ist in Figur 30 dargestellt. Der untere Drehring 25 muss somit angehoben werden, um gedreht zu werden. Die mindestens eine Blattfeder 27 gewährleistet anschliessend die Rückstellung.

Vorzugsweise weist der untere Einstellring 25 auf seinem inneren Umfang eine teilweise oder umlaufende Rasterung 255 auf, welche dem Benützer beim Drehen des Einstellrings 25 ein haptisches und/oder akustisches Signal gibt, damit der Benützer Gewissheit erlangt, dass er eine Einstellung des Mahlgrads vornimmt.

Diese Ausführungsform ermöglicht ein schlichtes und klassisches Erscheinungsbild und ist aufgrund der zwei mit der Oberfläche fluchtenden Einstellringen 12, 25 optisch ansprechend. Die Verwendung der zwei von aussen einfach zugänglichen Einstellringen 12, 25 ermöglicht eine sichere und einfache Handhabung des Behältermoduls 1, 2.

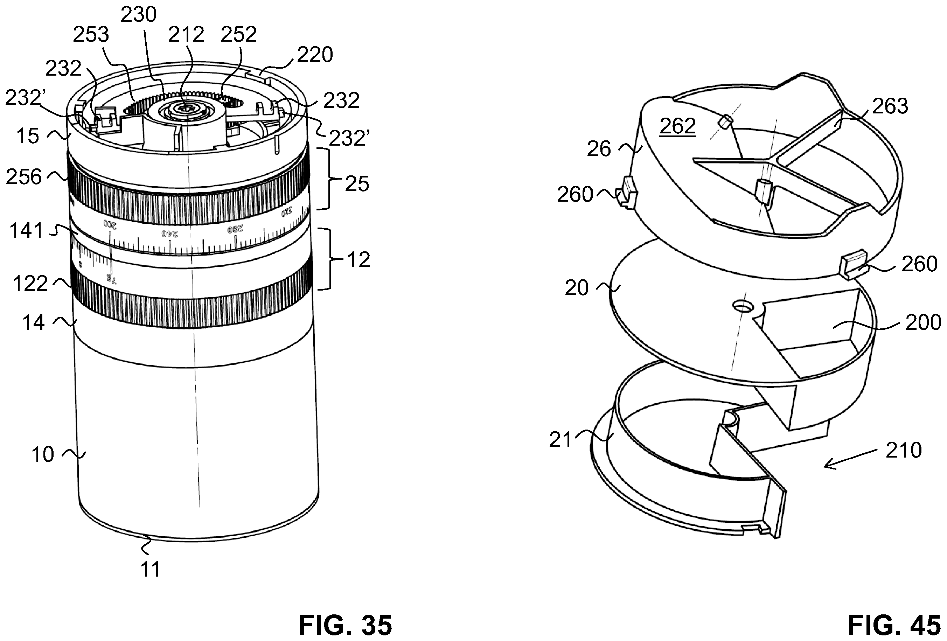

In den Figuren 35 bis 45 ist ein weiteres Ausführungsbeispiel dargestellt. Der Aufbau entspricht im Wesentlichen der Variante gemäss dem dritten Ausführungsbeispiel. Auch hier sind zwei Einstellringe 12, 25 vorhanden, welche relativ zum Kaffeebohnenbehälter und dem mittleren und unteren Gehäuseteilen 14, 15 gedreht werden können, um die Einstellung am Dosierer bzw. am Portionierer 2 sowie den Mahlgrad zu wählen. Die Einstellringe 12, 25 weisen nun einen gut greifbaren gerippten Rand 122, 256 sowie Markierungen auf. Die ortsfeste Referenzmarkierung findet sich auf dem dazwischenliegenden Bereich 141 des mittleren Gehäuseteils 14.

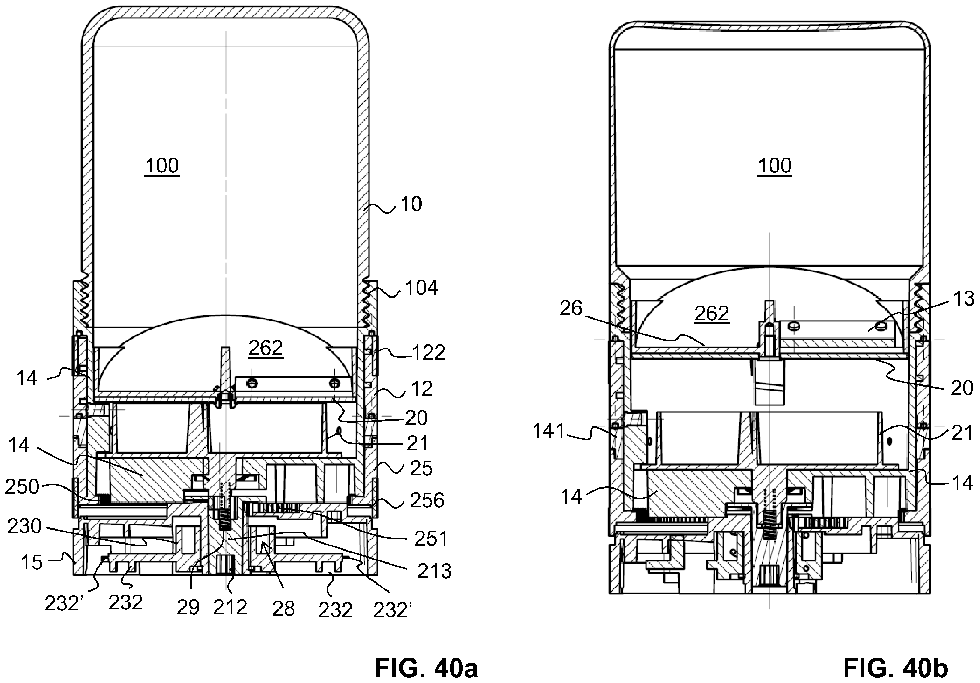

Im Gegensatz zu den vorherigen Beispielen ist der Boden des Kaffeebohnenbehälters 1 offen ausgebildet. Er weist ein Aussengewinde 104 auf, welches in ein Innengewinde des mittleren Gehäuseteils 14 eingreift. Dies ist in Figur 40 gut erkennbar. Der Portionier 2 ist im mittleren Gehäuseteil 14 angeordnet, der Mahlgrad-Einsteller 23 im unteren Gehäuseteil 15. Das mittlere und das untere Gehäuseteil 14, 15 sind vorzugsweise fest miteinander verbunden. In anderen Ausführungsformen sind sie jedoch, insbesondere zwecks einfacher Reinigung, zerstörungsfrei lösbar miteinander verbunden. Die Verbindung kann beispielsweise eine Steckverbindung sein.

Der Kaffeebohnenbehälter 1 ist in diesem Ausführungsbeispiel kreiszylinderförmig ausgebildet. Es ist kein Deckel vorhanden. Das im Gebrauch nach oben gerichtete Ende des Kaffeebohnenbehälters 1 ist geschlossen ausgebildet, wie dies in Figur 40 erkennbar ist. Bei Nichtgebrauch lässt sich der Kaffeebohnenbehälter 1 vom mittleren Gehäuseteil 14 trennen und mit einem luftdichten Deckel verschliessen. So lassen sich die im Moment nicht gebrauchten Kaffeebohnen optimal lagern. Der mittlere und untere Gehäuseteil 14, 15 lassen sich auf diese Weise zudem einfacher reinigen. Zudem lässt sich der Kaffeebohnenbehälter 1 somit als Einwegteil ausbilden. Das mittlere und untere Gehäuseteil 14, 15, welches gemeinsam ein Portionier- und Mahlgrad-Einstell-Modul bilden, lassen sich mehrfach verwenden. In anderen Ausführungsformen weist der Kaffeebohnenbehälter auch am oberen Ende eine Öffnung auf, welche mit einem Deckel luftdicht verschliessbar ist.

Im Übrigen ist der Portionierer 2 im Wesentlichen gleich ausgebildet wie im Ausführungsbeispiel gemäss den Figuren 24 bis 30. Gleiche Teile sind auch hier mit gleichen Bezugszeichen versehen. In Figur 45 sind das obere Dosierteil 26, die obere Drehscheibe 20 und die untere Drehscheibe 21 gut erkennbar. Im Unterschied zum vorherigen Beispiel weist das obere Dosierteil 26 Versteifungsrippen 263 auf. Zudem sind keine Einbuchtungen vorhanden, da die Dose 10 des Kaffeebohnenbehälters 1 auf das mittlere Gehäuseteil 14 aufgeschraubt ist. Die Funktionsweise ist dieselbe wie im vorherigen Beispiel. Zu beachten ist, dass wie in den vorherigen Beispielen der Boden der Kammer 200 offen ausgebildet ist und der sich über annähernd einem Dreiviertelkreis erstreckende nach oben offene Körper der unteren Drehscheibe 21 vorzugsweise nach unten geschlossen ausgebildet ist. Das obere Dosierteil 26 ist bis auf den Boden 262 ebenfalls nach unten offen ausgebildet, d.h. der Mantel des Dosierteils 26 bildet im übrigen Bereich einen Ring. Das obere Dosierteil 26 verschliesst die Dosierkammer nach oben hin, wenn die zwei Drehscheiben 20, 21 so gedreht sind, dass die Dosierkammer nach unten hin geöffnet ist. In Figur 40a ist der Portionierer mit minimaler Grösse der Dosierkammer dargestellt, in Figur 40b ist der Portionierer mit maximaler Grösse der Dosierkammer dargestellt. In beiden Figuren ist die Kammer selber aufgrund des gewählten Schnitts nicht gut erkennbar.

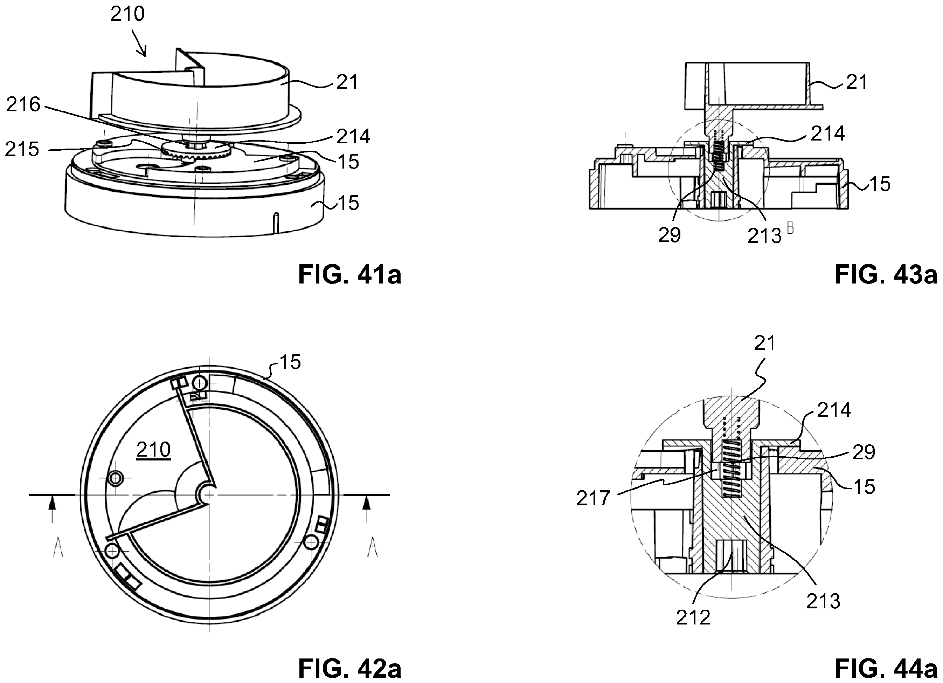

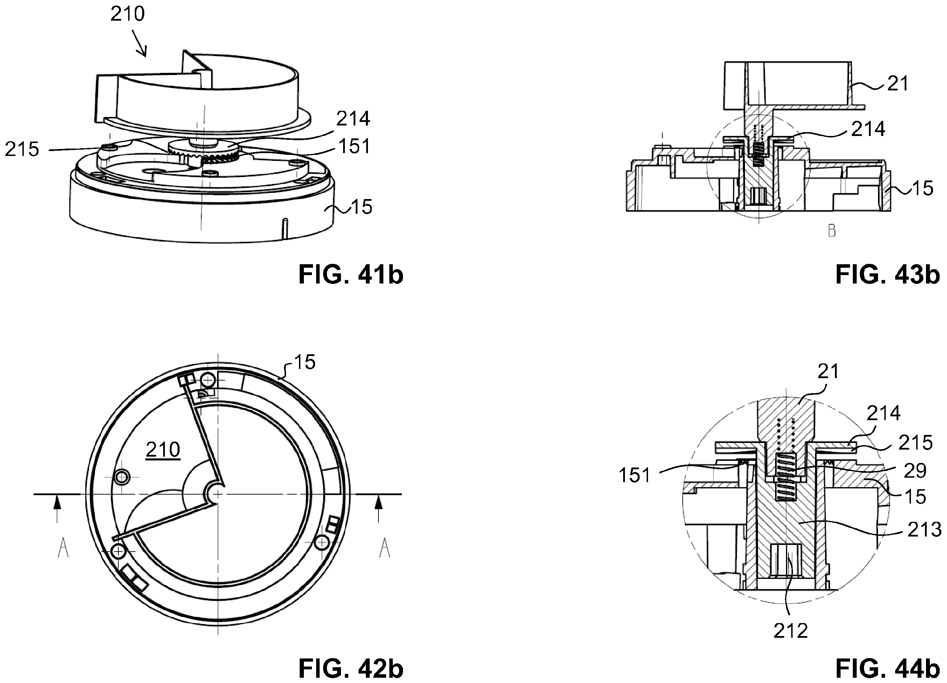

Der Portionierer 2 dieser Ausführungsform weist eine Verdrehsicherung auf. Diese verhindert, dass sich die Dosierkammer ungewollt bzw. frühzeitig nach unten öffnet, insbesondere wenn das Behältermodul auf die Kaffeemaschine aufgesetzt wird. Ein Drehsicherungs-Kolben 213 ist im unteren Gehäuseteil 15 angeordnet. Er weist an seinem unteren Ende die erste Antriebsachsenaufnahme 212 auf. An seinem oberen Ende ist ein umlaufender, radial nach aussen gerichteter Flansch 214 angeformt. Dies ist in den Figuren 43a, 43b, 44a und 44b gut erkennbar. Auf der Unterseite des Flansches 214 ist eine Verzahnung vorhanden, wie dies in den Figuren 41a und 41b gut erkennbar ist. Diese Verzahnung greift in eine nach oben gerichtete Verzahnung 151 des unteren Gehäuseteils 15 ein, wie dies in Figur 41b erkennbar ist. Eine Rückstellfeder 29 ist zwischen dem Drehsicherungs-Kolben 213 und der unteren Drehscheibe 21 angeordnet.

In den Figuren 41a bis 44a ist die Situation dargestellt, in welcher die Verdrehsicherung aktiv ist. Diese Situation liegt vor, wenn das Behältermodul noch nicht auf der Kaffeemaschine eingesetzt ist. Der Flansch 214 liegt auf dem unteren Gehäuseteil 15 auf, die Verzahnungen 215 und 151 greifen ineinander. Die Rückstellfeder 29 ist entspannt und hält die untere Drehscheibe 21 in einer oberen Position. Die untere Drehscheibe 21 ist dadurch gegenüber dem unteren Gehäuseteil 15 fixiert. Sie lässt sich somit nicht drehen und die Dosierkammer 200 lässt sich somit nicht nach unten öffnen.

In den Figuren 41b bis 44b ist die Situation dargestellt, in welcher die Verdrehsicherung inaktiv ist. Dies ist der Fall, wenn das Behältermodul auf der Kaffeemaschine eingesetzt ist. In diesem Fall greift die Antriebsachse 6 (siehe Figuren 17b und 25) in die erste Antriebsachsenaufnahme 212 ein und hebt den Drehsicherungs-Kolben 213 entgegen der Federkraft der Rückstellfeder 29 an. Dadurch wird der Flansch 214 angehoben und die Verzahnungen 215, 151 lösen sich voneinander. Der Mehrkant 216 steht im Eingriff mit der Mehrkantaufnahme 217. Die untere Drehscheibe 21 ist drehfest mit dem Drehsicherungs-Kolben 213 und somit mit der Antriebsachse 6 verbunden. Sie ist zudem vom unteren Gehäuseteil 15 gelöst und relativ zu diesem drehbar. Das untere Kammerteil 210 und somit die Dosierkammer lassen sich nun nach unten öffnen.

Ein weiterer Unterschied zu den oben beschriebenen Ausführungsformen ist im Mahlgrad-Einsteller 23 zu finden. Es ist dieselbe oder eine ähnliche Übersetzung vorhanden wie im vorherigen Beispiel. Auch hier ist der Drehring 230 teilkreisförmig ausgebildet. Die Innenverzahnung 253 ist wiederum axial vorstehend in einem Teilkreis angeordnet.

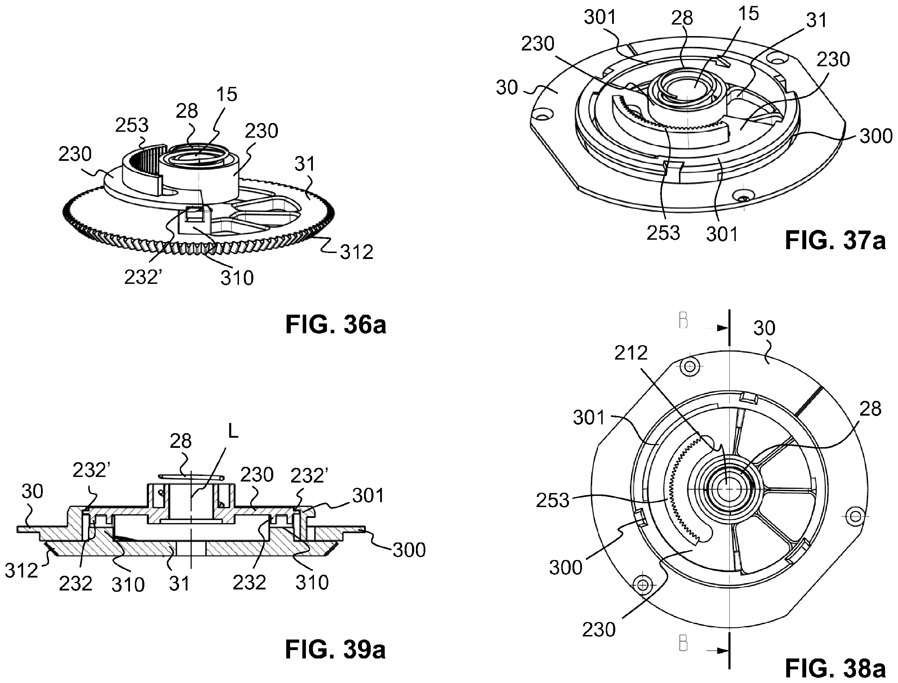

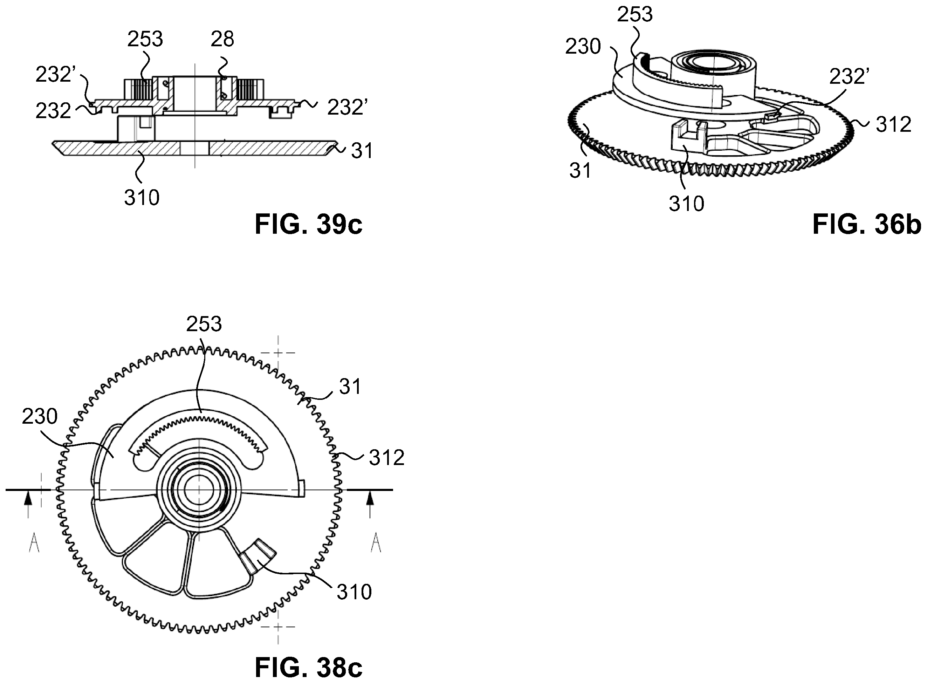

Der Drehring 230 ist in diesem Beispiel federbelastet zwischen Einstellscheibe 31 und unterem Gehäuseteil 15 gehalten. Die entsprechende Feder ist in den Figuren 36, 37 und 39 mit dem Bezugszeichen 28 bezeichnet. Wo sich die Feder im zusammengebauten Zustand des Behältermoduls 1, 2 befindet, ist in Figur 40a mit einem Pfeil bezeichnet, ohne dass die Feder 28 eingezeichnet ist.

Der Drehring 230 ist in diesem Beispiel als Teilkreis ausgebildet. Vorzugsweise umfasst er mindestens 180°. Er weist wiederum zwei Arme 232 auf, welche einander diametral gegenüber liegen. Sie sind in diesem Beispiel nach unten gerichtet, wie dies in den Figuren 35, 39a bis 39c und 40 gut erkennbar ist. Dem Drehring 230 stehen im Bereich der Arme 232 in radialer Richtung vorstehende Nasen 232' vor. Diese sind in den bereits genannten Figuren gut erkennbar.

Das Behältermodul 1, 2 wird für den Gebrauch wiederum mit einer Modulaufnahme 3 verbunden. In den 37a, 37b sowie 39a, 39b ist der zugehörige Aufnahmekörper 30 dargestellt. Er weist eine Scheibe zur Befestigung am oder in einem Gehäuse einer Kaffeemaschine sowie einen Bajonettverschluss 300 auf. Die Einrastnasen des Portionierers, genauer des unteren Gehäuseteils 15, greifen in ein entsprechendes Bajonettgewinde am äusseren Umfang des Bajonettverschlusses 300 ein. Auf seiner Innenseite weist der Bajonettverschluss 300 ein eine Kulissenführung 301 auf. In dieser Kulissenführung 301 greifen die zwei Nasen 232' des Drehrings 230 ein. Der Drehring 230 ist somit auf beiden Seiten eingespannt.

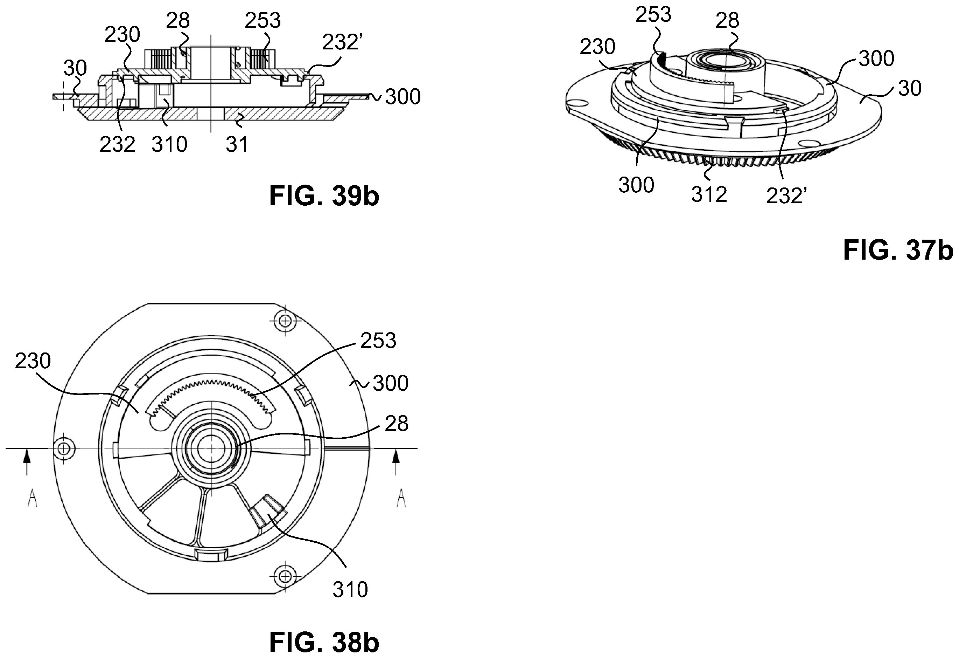

Die Einstellscheibe 31 weist zwei nach oben gerichtete Mitnehmer 310 auf, welche ebenfalls diametral einander gegenüber liegen. Sie befinden sich vorzugsweise im gleichen Abstand zur Längsmittelachse L wie die nach unten zu ihnen hin gerichteten Arme 232 (siehe Figur 39a).

Wird nun das Behältermodul 1, 2 auf den Bajonettverschluss 300 aufgedreht, so wird auch der Drehring 230 eingespannt, wobei er entlang der inneren Kulissenführung 301 nach oben gedrückt wird und die Feder 28 komprimiert wird. Wird das Behältermodul weiter entlang des Bajonettverschlusses in die Modulaufnahme 3 eingedreht, wird der Drehring 230 entweder von der Kulissenführung 310 freigegeben oder sie wird ihr entlang nach unten geführt. Der Drehring 230 senkt sich ab, die Feder 28 entspannt sich. Dadurch kontaktiert mindestens einer der zwei Arme 232 einen bzw. beide Mitnehmer 310 und drehen dadurch die Einstellscheibe 31. Entweder greifen die Arme 232 dabei in die Mitnehmer 310 ein oder sie berühren sie lediglich.

In den Figuren 36a, 37a, 38a und 39a ist die Situation dargestellt, wie sie bei vollständig befestigtem bzw. aufgesetztem Behältermodul vorliegt. Die Mitnehmer 310 sind kontaktiert und die Einstellscheibe 31 ist in die gewünschte Drehposition gebracht.

In den Figuren 36b, 37b, 37c, 38b, 38c, 39b und 39c ist die Situation dargestellt, bevor der Drehring 230 in den Bajonettverschluss 300 eingedreht wird.

Diese Anordnung erlaubt eine Einstellung des Mahlwerks in beide Richtungen. Somit kann auch bei bereits auf der Kaffeemaschine montiertem Behältermodul 1, 2 der Mahlgrad noch verändert werden. Bei Drehung des Einstellrings 25 in eine gewünschte Richtung dreht sich der Drehring 230 mit. Unabhängig von der Drehrichtung nimmt jeweils mindestens einer der zwei Arme 232 einen bzw. beide der zwei Mitnehmer 310 mit und dreht so die Einstellscheibe 31. Durch die Drehung der Einstellscheibe 31 dreht sich wiederum die damit im Eingriff stehende Überwurfmutter 42 und somit verschieben sich die Mahlscheiben relativ zueinander. Vorzugsweise stellt die Kaffeemaschine jedoch auch in diesem Ausführungsbeispiel nach Gebrauch das Mahlwerk automatisch auf den grössten Abstand der Mahlscheiben um, wenn das Behältermodul entfernt wird.

Die einzelnen Merkmale der oben beschriebenen Ausführungsbeispiele lassen sich auch in den anderen Ausführungsbeispielen verwenden. So lässt sich beispielsweise der aufschraubbare Kaffeebohnenbehälter auch in den ersten drei Ausführungsbeispielen einsetzen. Dasselbe gilt beispielsweise für die Mahlgradeinstellung der vierten Ausführungsform. Auch diese lässt sich in den ersten drei Ausführungsbeispielen verwenden.

Ferner werden einzelne Aspekte der hier beschriebenen Vorrichtungen als separate Erfindungen beansprucht, welche auch ohne die übrigen Elemente, bzw. ohne die erfinderische Idee des Behältermoduls, verwendet werden können. Beispielsweise lassen sich hier beschriebenen verschiedenen Arten der mechanischen Mahlwerkeinstellung, insbesondere jedoch nicht ausschliesslich in Kombination mit der manuellen Mahlgradeinstellung, auch in anderen Kaffeevorrichtungen verwenden. Auch die hier beschriebenen verschiedenen Varianten des Portionierers mit den zwei in ihrem Abstand zueinander veränderbaren Kammerteilen, welche eine unterschiedlich grosse Dosierkammer bilden und welche vorzugsweise mindestens teilweise drehbar und axial verschiebbar ausgebildet sind, lassen sich in anderen Portionieren, beispielsweise ohne Mahlgradeinstellung und/oder ohne Kopplung mit einer Kaffeevorrichtung. Auch die einzelnen Elemente des Mahlwerks, insbesondere die Anordnung der Förderschnecke im vorzugsweise gebogenen Einwurfkanal lässt sich unabhängig von dem beschriebenen Behältermodul in anderen Mahlwerken einsetzen.

Anstelle einer rein mechanischen Ausführungsform lassen sich, wie oben erwähnt, Informationen, beispielsweise zum Mahlgrad, auch über einen Datentransfer an das Mahlwerk übermitteln. Am Behältermodul kann ein beschreibbarer Datenspeicher vorhanden sein, auf welchen vorzugsweise bereits herstellerseitig ein Mahlgrad passend zur Kaffeesorte eingegeben ist. Die Kaffeevorrichtung, z.B. die Kaffeemühle oder die Kaffeemaschine, weist vorzugsweise eine Lese- und Schreibeinheit auf, welche mit der Steuerung des Mahlwerks kommuniziert oder Teil davon ist. Der Benützer der Vorrichtung hat jedoch beispielsweise die Möglichkeit, den Mahlgrad zu verändern, indem er eine entsprechende Eingabe zu einem gewünschten aktuellen Mahlgrad in die Kaffeevorrichtung, beispielsweise über ein Eingabemodul in die Steuerung, macht. Diese Neuwahl des Mahlgrads wird über die Lese- und Schreibeinheit auf den Datenspeicher des Behältermoduls übermittelt und dort gespeichert, um so als Basis für die nächste Betätigung der Vorrichtung bereitzustehen. Der Mahlgrad wird in dieser Ausführungsform somit nicht mehr manuell am Behältermodul eingestellt, sondern über einen beschreibbaren Datenspeicher auf dem Behältermodul, wobei eine Veränderung des aktuellen Mahlgrads an der Vorrichtung und nicht am Behältermodul vom Benützer eingegeben wird. Anstelle des Mahlgrades können so auch andere Daten gespeichert und vom Benutzer individuell verändert werden, wie z.B. Laufzeit des Mahlwerks, Geschwindigkeit des Mahlwerks, Wassertemperatur beim Aufbrühen, zu füllende Tassengrösse beim Abfüllen des Kaffees.

In einer anderen Ausführungsform erfolgt die Mahlgradeinstellung nach wie vor manuell und vorzugsweise mechanisch am Behältermodul. Die Übermittlung der Information zur Mahlgradeinstellung erfolgt jedoch nicht mechanisch sondern über einen Sensor, welcher vorzugsweise in oder an der Modulaufnahme 3 angeordnet ist und welcher mit der Steuerung des Mahlwerks kommuniziert. Der Sensor liest die vom Benützer gewählte Einstellung des Mahlgrads vom Behältermodul ab und übermittelt diese der Steuerung des Mahlwerks, vorauf das Mahlwerk entsprechend eingestellt wird.

Die erfindungsgemässe Einheit erlaubt somit ein einfaches und benützerfreundliches Wechseln zwischen Kaffeesorten und/oder Dosierungen und/oder Mahlgrade, ohne dass vorgängig gebrühter Kaffee zu einer Geschmacksbeeinträchtigung des nachfolgend gebrühten Kaffees führen könnte.

Die Offenbarung umfasst ferner die folgenden Punkte:
1. Einheit einer Kaffeevorrichtung, insbesondere einer Kaffeemaschine zum Brühen eines Kaffeegetränks, wobei die Einheit einen Kaffeebohnenbehälter (1) zur Lagerung der Kaffeebohnen, einen Portionierer (2) zur Dosierung der Kaffeebohnen für das Kaffeegetränk und ein Mahlwerk (4) zum Mahlen der dosierten Kaffeebohnen aufweist, dadurch gekennzeichnet, dass der Kaffeebohnenbehälter (1) und der Portionierer (2) in einem gemeinsamen Behältermodul ausgebildet sind, dass die Einheit eine Modulaufnahme (3) aufweist, mit welchem das Behältermodul bei Gebrauch verbindbar und nach Gebrauch entfernbar ist und dass das Behältermodul durch den Benützer wählbare Einstellungen einer Dosiermenge und eines Mahlgrades aufweist, wobei die Einstellung der Dosiermenge auf den Portionierer (2) und die Einstellung des Mahlgrades auf das Mahlwerk (4) wirkt.
2. Einheit nach Punkt 1, wobei die Einstellung der Dosiermenge und/oder die Einstellung des Mahlgrades manuell durchführbar sind.
3. Einheit nach einem der Punkte 1 oder 2, wobei die Einstellung der Dosiermenge und/oder die Einstellung des Mahlgrads vor der Verbindung des Behältermoduls mit der Modulaufnahme durchführbar ist.
4. Einheit nach einem der Punkte 1 bis 3, wobei die Einstellung der Dosiermenge und/oder die Einstellung des Mahlgrads nach der Verbindung des Behältermoduls mit der Modulaufnahme durchführbar ist.
5. Einheit nach einem der Punkte 1 bis 4, wobei die Modulaufnahme (3) eine Verbindung zwischen dem Portionierer (2) und dem Mahlwerk (4) schafft und wobei die Modulaufnahme (3) und das Mahlwerk (4) an oder in einem Gehäuse der Kaffeevorrichtung angeordnet sind.
6. Einheit nach einem der Punkte 1 bis 5, wobei das Behältermodul einen beschreibbaren Datenspeicher aufweist zur Kommunikation mit einer Lese- und Schreibeinheit der Modulaufnahme (3), wobei mindestens Daten zu einer aktuellen Mahlgradeinstellung des Mahlwerks (4) in den Datenspeicher speicherbar sind.
7. Einheit nach einem der Punkte 1 bis 6, wobei die Einstellungen der Dosiermenge und des Mahlgrads mechanisch erfolgen und wobei die Wirkung der Einstellungen auf den Portionierer (2) und/oder des Mahlwerks (4) mechanisch erfolgt.
8. Einheit nach Punkt 7, wobei die Modulaufnahme (3) einen Sensor zur Detektion der Einstellung des Mahlgrads am Behältermodul aufweist und wobei der Sensor mit einer Steuerung der Vorrichtung in kommunizierender Verbindung steht.
9. Einheit nach einem der Punkte 1 bis 8, wobei der Portionierer (2) nach Verbindung des Behältermoduls mit der Modulaufnahme (3) mittels eines Behältermodul-externen Antriebs (60) betätigbar ist, um eine gewählte Dosiermenge im Portionierer (2) bereit zu stellen und dem Mahlwerk (4) zuzuführen.
10. Einheit nach einem der Punkte 1 bis 9, wobei der Portionierer (2) eine Dosierkammer (200, 210) aufweist und wobei zwecks Einstellung der Dosiermenge das Aufnahmevolumen der Dosierkammer (200, 210) veränderbar ist.
11. Einheit nach Punkt 10, wobei der Portionierer (2) eine erste Drehscheibe (20) und eine zweite Drehscheibe (21) aufweist, deren Abstand zueinander veränderbar ist, und welche gemeinsam relativ zum dem Kaffeebohnenbehälter (1) und relativ zu einem Boden (22) des Portionierers (2) drehbar sind, wobei die Dosierkammer (200, 210) zwischen der ersten und zweiten Drehscheibe (20, 21) ausgebildet und wobei die Dosierkammer (200, 210) abhängig von der Drehposition der ersten und zweiten Drehscheibe (20, 21) gegenüber einem Bauteil der beiden Bauteile, Kaffeebohnenbehälter (1) und Mahlwerk (4) offen ist und gegenüber dem anderen Bauteil dieser zwei Bauteile geschlossen ist.
12. Einheit nach Punkt 10, wobei der Portionierer (2) ein erstes Kammerteil (26, 20) und ein zweites Kammerteil (21) aufweist, welche in axialer Richtung relativ zueinander verschiebbar sind, wobei die Dosierkammer (200, 210) zwischen dem ersten und dem zweiten Kammerteil (26, 20, 21) ausgebildet ist und wobei die Dosierkammer (200, 210) abhängig von einer Drehposition mindestens eines der zwei Kammerteile (26, 20, 21) gegenüber einem Bauteil der beiden Bauteile, Kaffeebohnenbehälter (1) und Mahlwerk (4) offen ist und gegenüber dem anderen Bauteil dieser zwei Bauteile geschlossen ist.
13. Einheit nach einem der Punkte 1 bis 12, wobei zur Einstellung der Dosiermenge ein Einstellring (12) vorhanden ist, welcher an einem Umfang des Kaffeebohnenbehälters (1) drehbar angeordnet ist.
14. Einheit nach Punkt 13, wobei der Einstellring (12) relativ zum Kaffeebohnenbehälter (1) drehbar ist.
15. Einheit nach einem der Punkte 1 bis 14, wobei das Mahlwerk (4) zwei Mahlscheiben (430, 440) aufweist, wobei mindestens eine der zwei Mahlscheiben (430, 440) nach Massgabe der Einstellung des Mahlgrades bei oder nach Verbindung des Behältermoduls mit der Modulaufnahme (3) verschiebbar ist.
16. Einheit nach Punkt 15, wobei das Behältermodul einen Mahlgrad-Einsteller (23) aufweist, welcher bei Verbindung des Behältermoduls mit der Modulaufnahme (3) in mechanische Wirkverbindung mit dem Mahlwerk (4) bringbar ist, wodurch sich der Abstand von Mahlscheiben (430, 440) des Mahlwerks (4) verändert.
17. Einheit nach einem der Punkte 15 oder 16, wobei die Einstellung des Mahlgrads am Behältermodul mit einer drehbaren Einstellscheibe (31) der Modulaufnahme (3) in Wirkverbindung bringbar ist, wobei die Einstellscheibe (31) mit einer drehbaren Überwurfmutter (42) des Mahlwerks (4) in Wirkverbindung steht und wobei aufgrund der Drehung der Überwurfmutter (42) eine erste Mahlscheibe (430) relativ zu einer zweiten Mahlscheibe (440) verschiebbar ist, so dass sich deren Abstand verändert.
18. Einheit nach Punkt 17, wobei die erste Mahlscheibe eine nicht drehende feste Mahlscheibe (430) und die zweite Mahlscheibe eine sich drehende Laufmahlscheibe (440) ist.
19. Einheit nach einem der Punkte 1 bis 18, wobei das Behältermodul ein Einstellmittel (23, 25) zur Einstellung des Mahlgrads aufweist, wobei dieses Einstellmittel (23, 25) auf einer Unterseite oder am Umfang des Behältermoduls angeordnet ist.
20. Einheit nach Punkt 19, wobei das Einstellmittel ein Einstellring (25) ist, welcher an einem Umfang des Kaffeebohnenbehälters (1) drehbar angeordnet ist.
21. Einheit nach Punkt 20, wobei der Einstellring (25) zur Einstellung des Mahlgrades relativ zum Kaffeebohnenbehälter (1) drehbar ist.
22. Einheit nach einem der Punkte 15 bis 21, wobei die Einstellung des Mahlgrades bei montiertem Behältermodul manuell veränderbar ist.
23. Einheit nach einem der Punkte 15 bis 22, wobei die Einstellung des Mahlgrades bei montiertem Behältermodul sowohl in Richtung eines feineren Mahlgrades wie auch in Richtung eines gröberen Mahlgrades veränderbar ist.
24. Einheit nach einem der Punkte 1 bis 23, wobei eine Drehsicherung vorhanden ist, welche ein vorzeitiges Entleeren des Portionierers (2) verhindert.
25. Einheit nach einem der Punkte 1 bis 24, wobei der Kaffeebohnenbehälter (1) lösbar mit dem Portionierer (2) verbunden ist und wobei der Portionierer zusammen mit einem Mahlgrad-Einsteller (23) zum Einstellen des Mahlgrades ein Untermodul bilden, welches zur Verbindung mit der Modulaufnahme (3) ausgebildet ist.
26. Einheit nach einem der Punkte 1 bis 25, wobei das Mahlwerk (4) einen die Mahlscheiben (430, 440) antreibenden Förderrotor (441) aufweist, wobei der Förderrotor (441) annähernd oder genau horizontal verlaufend angeordnet ist.
27. Einheit nach einem der Punkte 1 bis 26, wobei das Mahlwerk (4) einen Bohneneinlasskanal (410) aufweist, welcher gebogen ausgebildet ist.
28. Einheit nach den Punkten 25 und 26, wobei sich der Förderrotor (441) in den Bohneneinlasskanal (410) erstreckt.
29. Behältermodul, insbesondere einer Einheit gemäss einem der Punkte 1 bis 28, wobei das Behältermodul einen Kaffeebohnenbehälter (1) zur Lagerung der Kaffeebohnen und einen Portionierer (2) zur Dosierung der Kaffeebohnen für die Einzelportion aufweist, wobei das Behältermodul Verbindungsmittel zur lösbaren Verbindung mit der Modulaufnahme (3) der Kaffeevorrichtung aufweist und wobei das Behältermodul durch den Benützer wählbare Einstellungen einer Dosiermenge und eines Mahlgrades aufweist, wobei die Einstellung der Dosiermenge auf den Portionierer (2) und die Einstellung des Mahlgrades auf das Mahlwerk wirkt.
30. Behältermodul nach Punkt 29, wobei das Behältermodul einen Mahlgrad-Einsteller (23) zum Einstellen des Mahlgrades aufweist, wobei der Mahlgrad-Einsteller (23), welcher bei Verbindung des Behältermoduls mit der Modulaufnahme (3) in mechanische Wirkverbindung mit dem Mahlwerk (4) bringbar ist, wodurch sich der Abstand von Mahlscheiben (430, 440) des Mahlwerks (4) verändert.
31. Einheit einer Kaffeevorrichtung, insbesondere einer Kaffeemaschine zum Brühen eines Kaffeegetränks, wobei die Einheit einen Kaffeebohnenbehälter (1) zur Lagerung der Kaffeebohnen, einen Portionierer (2) zur Dosierung der Kaffeebohnen für das Kaffeegetränk und einen Mahlgrad-Einsteller (23) zur mechanischen Wirkverbindung mit einem Mahlwerk (4) zum Mahlen der dosierten Kaffeebohnen aufweist, dadurch gekennzeichnet, dass der Kaffeebohnenbehälter (1) und der Portionierer (2) in einem gemeinsamen Behältermodul ausgebildet sind, dass die Einheit eine Modulaufnahme (3) aufweist, mit welchem das Behältermodul bei Gebrauch verbindbar und nach Gebrauch entfernbar ist und dass das Behältermodul durch den Benützer wählbare Einstellungen einer Dosiermenge und eines Mahlgrades aufweist, wobei die Einstellung der Dosiermenge auf den Portionierer (2) und die Einstellung des Mahlgrades mittels des Mahlgrad-Einstellers (23) auf das Mahlwerk (4) wirkt.

**BEZUGSZEICHENLISTE**

| | | | |
|---|---|---|---|
| 1 | Kaffeebohnenbehälter | 211 | Federhalter |
| 10 | Dose | 212 | erste Antriebsachsenaufnahme |
| 100 | Innenraum | | |
| 101 | Boden | 213 | Drehsicherungs-Kolben |
| 102 | Absatz | 214 | Flansch |
| 103 | Dosenauslass | 215 | Verzahnung |
| 104 | Aussengewinde | 216 | Mehrkant |
| 11 | Deckel | 217 | Mehrkantaufnahme |
| 110 | Griffelement | 22 | Boden des Portionierers |
| 111 | Drückerelement | 220 | Einrastnasen |
| 12 | Einstellring | 221 | Aussengewinde |
| 120 | Vertiefungen | 222 | dritte Antriebsachsenaufnahme |
| 121 | Innengewinde | | |
| 122 | gerippter Rand | 224 | Kammerauslass |
| 13 | Ausweichlippe | 225 | Zahnteilkranz |
| 14 | mittleres Gehäuseteil | 226 | Mitnehmernut |
| 140 | Fenster | 227 | Wand |
| 141 | Bereich des mittleren | 228 | Fläche |
| | Gehäuses | 23 | Mahlgrad-Einsteller |
| 15 | unteres Gehäuseteil | 230 | Drehring |
| 150 | Verzahnung | 232 | Arm |
| 151 | Verzahnung | 232' | Nase |
| 16 | Kugel | 233 | Verschiebeplatte |
| | | 233' | Winkelelement |
| 2 | Portionierer | 233" | Schenkel |
| 20 | obere Drehscheibe | 234 | Druckfeder |
| 200 | oberes Kammerteil | 235 | Zahn |
| 201 | Aufnahmeschlitz | 235' | Zahnstange |
| 202 | Führungsmittel | 236 | Fenster |
| 21 | untere Drehscheibe | 237 | Befestigungsscheibe |
| 210 | unteres Kammerteil | 238 | Befestigungsloch |
| 239 | erste Antriebsachsen-Durchgangsöffnung | 4 | Mahlwerk |
| 24 | Identifikationsmarkierung | 40 | Gegenlager |
| 25 | unterer Einstellring | 400 | Befestigungsloch |
| 250 | Innenzahnkranz | 41 | Bohneneinlass |
| 251 | Aussenverzahnung | 410 | Einwurfkanal |
| 252 | Aussenverzahnung | 411 | Flansch |
| 253 | Innenverzahnung | 42 | Überwurfmutter |
| 255 | Rasterung | 420 | erste Nut des Bajonettverschlusses |
| 256 | gerippter Rand | | |
| 26 | oberes Dosierteil | 421 | zweite Nut |
| 260 | Aussengewindeabschnitte | 422 | zweites Kegelrad |
| 261 | Einbuchtungen | 43 | Festscheibenflansch |
| 262 | beweglicher Boden | 430 | feste Mahlscheibe |
| 263 | Versteifungsrippe | 431 | Nase |
| 27 | Blattfeder | 432 | Durchgangsöffnung |
| 28 | Feder | 44 | Laufscheibenflansch |
| 29 | Rückstellfeder | 440 | Laufmahlscheibe |
| | | 441 | Förderrotor |
| 3 | Modulaufnahme | 45 | Mahlgehäuse |
| 30 | Aufnahmekörper | 450 | Durchgangsöffnung |
| 300 | Bajonettverschluss | 451 | Nase |
| 301 | Kulissenführung | 452 | Befestigungsloch |
| 31 | Einstellscheibe | | |
| 310 | Mitnehmer | 47 | Förderfeder |
| 310' | Mitnehmer | | |
| 311 | Bohnen-Durchgangsöffnung | 5 | Mahlwerkmotor |
| 312 | erstes Kegelrad | 50 | Verbindungsmutter |
| 32 | Fixierscheibe | | |
| 320 | zweite Antriebsachsen-Durchgangsöffnung | 6 | Antriebsachse |
| | | 60 | Antrieb |
| 321 | Durchgangsloch | | |
| 33 | Lesegerät | 7 | Grundplatte |
| 70 | Durchgangsöffnung | E | Einheit |
| | | RK | restliche Kaffeemaschine |
| 80 | erster Abstand | L | Längsmittelachse |
| 81 | zweiter Abstand | A | Trennung zwischen Behältermodul und restlicher Einheit |
| 9 | Steuerung der Einheit | | |
| | | B | Trennung zwischen Einheit und restlicher Kaffeemaschine |
| M | Kaffeepulver | | |
| I | Information | | |

## Patentansprüche

1. Behältermodul zur Verwendung in einer Kaffeevorrichtung, die ein Mahlwerk aufweist, insbesondere einer Kaffeemaschine zum Brühen eines Kaffeegetränks, wobei das Behältermodul einen Kaffeebohnenbehälter (1) zur Lagerung von Kaffeebohnen und einen Portionierer (2) zur Dosierung der Kaffeebohnen aufweist, wobei das Behältermodul Verbindungsmittel zur lösbaren Verbindung mit einer Modulaufnahme (3) der Kaffeevorrichtung aufweist,
wobei das Behältermodul einen beschreibbaren Datenspeicher aufweist, auf welchem Daten eingegeben sind, die mittels Eingabe in die Kaffeevorrichtung und mittels Übermittlung von der Kaffeevorrichtung an den Datenspeicher von einem Benützer veränderbar sind.

2. Behältermodul zur Verwendung in einer Kaffeevorrichtung, die ein Mahlwerk aufweist, insbesondere einer Kaffeemaschine zum Brühen eines Kaffeegetränks, wobei das Behältermodul einen Kaffeebohnenbehälter (1) zur Lagerung von Kaffeebohnen und einen Portionierer (2) zur Dosierung der Kaffeebohnen aufweist, wobei das Behältermodul Verbindungsmittel zur lösbaren Verbindung mit einer Modulaufnahme (3) der Kaffeevorrichtung aufweist,
wobei das Behältermodul mit Grundinformationen zum Mahlgrad und zur Dosierung versehen ist, welche Einstellungen des Portionierers und des Mahlwerks ermöglichen, wobei die Grundinformation vom Benützer änderbar ist.

3. Behältermodul zur Verwendung in einer Kaffeevorrichtung, die ein Mahlwerk aufweist, insbesondere einer Kaffeemaschine zum Brühen eines Kaffeegetränks, wobei das Behältermodul einen Kaffeebohnenbehälter (1) zur Lagerung von Kaffeebohnen und einen Portionierer (2) zur Dosierung der Kaffeebohnen aufweist, wobei das Behältermodul Verbindungsmittel zur lösbaren Verbindung mit einer Modulaufnahme (3) der Kaffeevorrichtung aufweist,
wobei das Behältermodul einen beschreibbaren Datenspeicher aufweist zur Kommunikation mit einer Lese- und Schreibeinheit der Modulaufnahme, wobei mindestens Daten zu einer aktuellen Mahlgradeinstellung der Kaffeevorrichtung des Mahlwerks in den Datenspeicher speicherbar sind.

4. Behältermodul nach Anspruch 1, wobei der beschreibbare Datenspeicher zur Kommunikation mit einer Lese- und Schreibeinheit der Modulaufnahme ausgebildet ist, wobei mindestens Daten zu einer aktuellen Mahlgradeinstellung der Kaffeevorrichtung des Mahlwerks in den Datenspeicher speicherbar sind.

5. Behältermodul nach Anspruch einem der Ansprüche 1, 3 oder 4, wobei das Behältermodul mit Grundinformationen zum Mahlgrad und zur Dosierung versehen ist, welche Einstellungen des Portionierers und des Mahlwerks ermöglichen, wobei die Grundinformation vom Benützer änderbar ist.

6. Behältermodul nach einem der Ansprüche 1 bis 5, wobei die Daten bzw. die Grundinformationen eine Mahlgradeinstellung oder eine Laufzeit des Mahlwerks oder eine Geschwindigkeit des Mahlwerks oder eine Wassertemperatur zum Aufbrühen oder eine zu füllende Tassengrösse beim Abfüllen des Kaffees betrifft.

7. Behältermodul nach einem der Ansprüche 1 bis 6, wobei das Behältermodul durch den Benützer wählbare Einstellungen einer Dosiermenge und eines Mahlgrades aufweist, wobei die Einstellung der Dosiermenge auf den Portionierer (2) und die Einstellung des Mahlgrades auf das Mahlwerk wirkt.

8. Behältermodul nach einem der Ansprüche 1 bis 7, wobei der Portionierer (2) nach Verbindung des Behältermoduls mit der Modulaufnahme (3) mittels eines Behältermodul-externen Antriebs (60) betätigbar ist, um eine gewählte Dosiermenge im Portionierer (2) bereit zu stellen und dem Mahlwerk (4) zuzuführen.

9. Behältermodul nach einem der Ansprüche 1 bis 8, wobei der Portionierer (2) eine Dosierkammer (200, 210) aufweist und wobei zwecks Einstellung der Dosiermenge das Aufnahmevolumen der Dosierkammer (200, 210) veränderbar ist.

10. Behältermodul nach einem der Ansprüche 1 bis 9, wobei das Behältermodul eine Identifikationsmarkierung aufweist, die mittels eines Lesegeräts oder eines Sensors lesbar ist.

11. Behältermodul nach einem der Ansprüche 1 bis 10, wobei vom Benützer geänderte Daten oder Grundinformationen auf dem Behältermodul bzw. im Datenspeicher speicherbar sind.

12. Einheit einer Kaffeevorrichtung, insbesondere einer Kaffeemaschine zum Brühen eines Kaffeegetränks, wobei die Einheit ein Behältermodul gemäss einem der Ansprüche 1 bis 11 und die Modulaufnahme (3) zur lösbaren Verbindung mit dem Behältermodul aufweist, wobei das Behältermodul bei Gebrauch verbindbar und nach Gebrauch entfernbar ist.

13. Einheit nach Anspruch 12, wobei die Modulaufnahme (3) einen Sensor zur Detektion der Einstellung des Mahlgrads am Behältermodul aufweist und wobei der Sensor mit einer Steuerung der Vorrichtung in kommunizierender Verbindung steht.

14. Einheit nach einem der Ansprüche 12 oder 13, wobei die Einstellungen der Dosiermenge und des Mahlgrads mechanisch erfolgen und wobei die Wirkung der Einstellungen auf den Portionierer (2) und/oder des Mahlwerks (4) mechanisch erfolgt.

15. Einheit nach einem der Ansprüche 12 oder 13, wobei die Einstellungen des Portionierers und/oder des Mahlwerks elektronisch erfolgt.

16. Einheit nach einem der Ansprüche 12 bis 15, wobei der Portionierer (2) nach Verbindung des Behältermoduls mit der Modulaufnahme (3) mittels eines Behältermodul-externen Antriebs (60) betätigbar ist, um eine gewählte Dosiermenge im Portionierer (2) bereit zu stellen und dem Mahlwerk (4) zuzuführen.

17. Einheit nach einem der Ansprüche 12 bis 16, wobei die Einheit ein Mahlwerk (4) zum Mahlen der dosierten Kaffeebohnen aufweist.

18. Einheit einer Kaffeevorrichtung, insbesondere einer Kaffeemaschine zum Brühen eines Kaffeegetränks, vorzugsweise nach einem der Ansprüche 12 bis 17, wobei die Einheit einen Kaffeebohnenbehälter (1) zur Lagerung der Kaffeebohnen, einen Portionierer (2) zur Dosierung der Kaffeebohnen für das Kaffeegetränk aufweist, wobei der Kaffeebohnenbehälter (1) und der Portionierer (2) in einem gemeinsamen Behältermodul ausgebildet sind, wobei die Einheit eine Modulaufnahme (3) aufweist, mit welchem das Behältermodul bei Gebrauch verbindbar und nach Gebrauch entfernbar ist, und wobei das Behältermodul durch den Benützer manuell, vorzugsweise mechanisch, wählbare Einstellungen eines Mahlgrades aufweist, wobei die Einheit einen Sensor aufweist zur Übermittlung der Mahlgradeinstellung an eine Steuerung eines Mahlwerks der Kaffeevorrichtung zwecks Einstellung eines Mahlwerks der Kaffeevorrichtung.
